# EUROPEAN PATENT APPLICATION

(11) **EP 2 227 013 A2**
(43) Date of publication of application: **08.09.2010**
(21) Application number: 10155462.4
(22) Date of filing: 04.03.2010
(51) Int. Cl.: H04N 7/15

(54) **Virtual distributed multipoint control unit**

(30) Priority: 04.03.2009 US 157511 P; 25.02.2010 US 712947; 25.02.2010 US 712964; 04.03.2009 US 157516 P
(71) Applicant: Lifesize Communications Inc., Austin, TX 78746 (US)
(72) Inventor: King, Keith C., Austin, TX 87750 (US); Goyal, Ashish, Bangalore 560043 (IN); Kulkarni, Hrishikesh Gopal, Bangalore 560076 (IN); Brandt, Matthew K., Driftwood, TX 78619 (US); Mock, Wayne E., Round Rock, TX 78681 (US)
(74) Representative: Heselberger, Johannes

(57) **Abstract**

A virtual distributed multipoint control unit in a videoconference may be implemented using a master endpoint, one or more facilitator endpoints, and one or more leaf endpoints. The facilitator endpoint(s) may receive video and/or audio from the leaf endpoints (which may provide/receive videoconference audio and video to one or more local participants). The master endpoint may receive video and/or audio from one or more facilitator endpoints (which may include cumulative video stream from multiple leaf endpoints) and/or directly from one or more leaf endpoints. The master endpoint may arrange received video and/or audio and provide cumulative video and/or audio streams to the leaf endpoints (e.g., directly and/or through the facilitator endpoints). The virtual distributed multipoint control unit may support a conference with more leaf endpoints than the master endpoint has input ports and/or decoders.

## Description

### BACKGROUND

### Priority Information

This application claims benefit of priority of U.S. provisional application Serial No. 61/157,511 titled "Virtual Distributed Multipoint Control Unit" filed March 4, 2009, whose inventors were Keith C. King, Ashish Goyal, and Hrishikesh Gopal Kulkarni, and U.S. provisional application Serial No. 61/157,516 titled "Videoconferencing Endpoint Extension" filed March 4, 2009, whose inventors were Keith C. king, Matthew K. Brandt, and Wayne E. Mock, which is hereby incorporated by reference in its entirety as though fully and completely set forth herein, which are hereby incorporated by reference in their entirety as though fully and completely set forth herein.

### Field of the Invention

The present invention relates generally to conferencing and, more specifically, to videoconferencing.

### Description of the Related Art

Videoconferencing may be used to allow two or more participants at remote locations to communicate using both video and audio. Each participant location may include a videoconferencing system for video/audio communication with other participants. Each videoconferencing system may include a camera and microphone to collect video and audio from a first or local participant to send to one or more other (remote) participants. Each videoconferencing system may also include a display and speaker to reproduce video and audio received from remote participant(s). Each videoconferencing system may also be coupled to a computer system to allow additional functionality into the videoconference. For example, additional functionality may include data conferencing (including displaying and/or modifying a document or presentation for both participants during the conference).

### SUMMARY

In various embodiments, a virtual distributed multipoint control unit may be implemented using a master endpoint, one or more facilitator endpoints, and one or more leaf endpoints. The virtual distributed multipoint control unit may support a conference with more endpoints (e.g., more leaf endpoints and facilitator endpoints) than the master endpoint has input ports and/or decoders. In other words, in one embodiment, the master endpoint and the one or more facilitator endpoints may operate together as a distributed "virtual MCU", wherein this "virtual MCU" can support more endpoints in the videoconference than would be possible by only the master endpoint alone. In one embodiment, the facilitator endpoint(s) may provide supplemental video and/or audio processing for the master endpoint, thus enabling a greater number of endpoints in the videoconference than the master endpoint would normally be able to handle.

The facilitator endpoint(s) may receive video and/or audio from the leaf endpoints (which may provide/receive videoconference video and audio to/from one or more local participants). The master endpoint may receive video and/or audio from one or more facilitator endpoints (which may include cumulative video and/or audio streams from multiple leaf endpoints) and/or directly from one or more leaf endpoints. The master endpoint may arrange received video and/or audio and provide cumulative video and/or audio streams to the leaf endpoints (e.g., directly and/or through the facilitator endpoints).

In some embodiments, the facilitator endpoint may generate a composite video image with two or more video images received from two or more respective leaf endpoints communicating with the facilitator endpoint in the videoconference. The facilitator endpoint may transmit the composite video image to the master endpoint. The master endpoint may receive the composite video image (and, for example, coordinate information for video images in the composite video image). The master endpoint may separate out the video images using the coordinate information. The master endpoint may generate a new composite video image with images from multiple leaf endpoints in the conference. The master endpoint may transmit the composite video image to the leaf endpoints in the conference (e.g., directly or through the facilitator endpoints). The leaf endpoints may separate out the video images of the composite video image and form a different composite video image to display (e.g., according to a local user preference).

In various embodiments, the facilitator endpoints may send received audio streams to the master endpoint. Cumulative audio streams may be created by the master endpoint and/or facilitator endpoint for the leaf endpoints in the videoconference. In some embodiments, the audio of a respective leaf endpoint may not be included in the cumulative audio stream sent to the respective leaf endpoint.

In some embodiments, a leaf endpoint may call a master endpoint or facilitator endpoint to start/join a videoconference. The master endpoint may assign the leaf endpoint to a facilitator endpoint based on at least one operable characteristic of the facilitator endpoint or leaf endpoint. The leaf endpoint may then call the assigned facilitator endpoint or be transferred to the facilitator endpoint by the master endpoint. If the master endpoint receives an indication that a facilitator endpoint in the videoconference will or has become unavailable, the master endpoint may locate a different facilitator endpoint to use in the videoconference. The master endpoint may send instructions to the respective leaf endpoints and/or substitute facilitator endpoint to establish the new communication link.

In various embodiments, a primary endpoint may determine whether to have one or more endpoints in a videoconference managed by a secondary endpoint. The primary endpoint may make the determination before the videoconference (e.g., upon receiving a request to initiate a videoconference) or during the videoconference. In some embodiments, the primary endpoint may manage a group of secondary endpoints such that, if needed, the primary endpoint can use one or more of the secondary endpoints to manage the videoconference and/or assist the primary endpoint in managing the videoconference by supporting one or more endpoints involved in the videoconference.

In some embodiments, the primary endpoint may determine whether to switch conference communications of one or more of the endpoints in the videoconference from the primary endpoint to a secondary endpoint in the videoconference. For example, the primary endpoint may switch conference communications if the primary endpoint needs additional inputs to manage the videoconference. For example, switching may occur if the number of video inputs (e.g., from remote endpoints, local cameras, etc.) in a videoconference are about to exceed or are predicted to exceed the processing capabilities (e.g., the number of decoder ports) of the primary endpoint. In this case, the primary endpoint may make the switching determination to transfer one or more of the video input sources (e.g., remote endpoints) to the secondary endpoint with capacity to manage (or assist in managing) the videoconference. The primary endpoint may thus make the switching determination based in part on a number of endpoints in the videoconference (e.g., if the number of endpoints exceeds a number of input ports of the primary endpoint, the primary endpoint may switch one or more of the endpoints to a secondary endpoint). Switching may also occur where the primary endpoint is transferring the entire videoconference to one or more secondary endpoints.

In some embodiments, the primary endpoint may communicate the switching instructions to the secondary endpoint and/or the endpoints in the videoconference to be switched. In some embodiments, the primary endpoint may transfer one or more of the video input sources in the videoconference to a secondary endpoint that the primary endpoint controls (or may pass control of the entire videoconference over to the secondary endpoint). In some embodiments, the primary endpoint may seamlessly pass one or more of the endpoints to the secondary endpoint such that participants in the videoconference may not be aware that a switch has been performed. In some embodiments, the primary endpoint may contact the secondary endpoint and may then pass endpoints to the secondary endpoint by having the endpoints to be passed send their video (and/or audio) to a different address (e.g., the IP (Internet Protocol) address of the secondary endpoint). The primary endpoint may also pass configuration information for the endpoints to the secondary endpoint. In some embodiments, the primary endpoint may make the switching determination based at least in part on an external indication (e.g., a participant in the videoconference may direct the primary endpoint to perform the switch and/or may specify a secondary endpoint to switch the communications to).

In some embodiments, the primary endpoint may manage multiple secondary endpoints to conduct one or more videoconferences. In some embodiments, the primary endpoint may use one secondary endpoint per videoconference. As another example, the primary endpoint may organize videoconferences on several secondary endpoints in a stacked method such that all of the input ports of one secondary endpoint are used before another secondary endpoint is used. Using a stacked method, a single videoconference may actually be supported on multiple secondary endpoints. In some embodiments, the primary endpoint and/or secondary endpoint may use an n-talker processing method to support more videoconferencing endpoints in one or more of the videoconferences than the total number of input ports of the videoconferences.

### Brief Description of the Drawings

**FIGs. 1a****-c** illustrate a videoconferencing endpoint network, according to an embodiment.

**FIG. 2** illustrates a videoconferencing endpoint, according to an embodiment.

**FIG. 3** illustrates a flowchart of a method for implementing a distributed virtual multipoint control unit to enable a videoconference between at least two leaf endpoints using a facilitator endpoint and a master endpoint, according to an embodiment.

**FIGs. 4a****-d** illustrate arrangements for encoders/decoders in videoconferencing endpoints, according to an embodiment.

**FIGs. 5a****-b** illustrate overall views of the re-compositing process including a virtual decoder, according to an embodiment.

**FIG. 6** illustrates a video image flow, according to an embodiment.

**FIG. 7** illustrates a video image layout, according to an embodiment.

**FIGs. 8a****-b** illustrate separated video images for arrangement in a new video layout, according to an embodiment.

**FIG. 9** illustrates a coordinate system for a video frame, according to an embodiment.

**FIG. 10** illustrates various video image layouts, according to various embodiments.

**FIG. 11** illustrates a flowchart of a method for audio management in a distributed virtual multipoint control unit, according to an embodiment.

**FIG. 12** illustrates a flowchart of a method for controlling a distributed virtual multipoint control unit, according to an embodiment.

**FIG. 13** illustrates a flowchart of a method for isolating a leaf endpoint in a distributed virtual multipoint control unit, according to an embodiment.

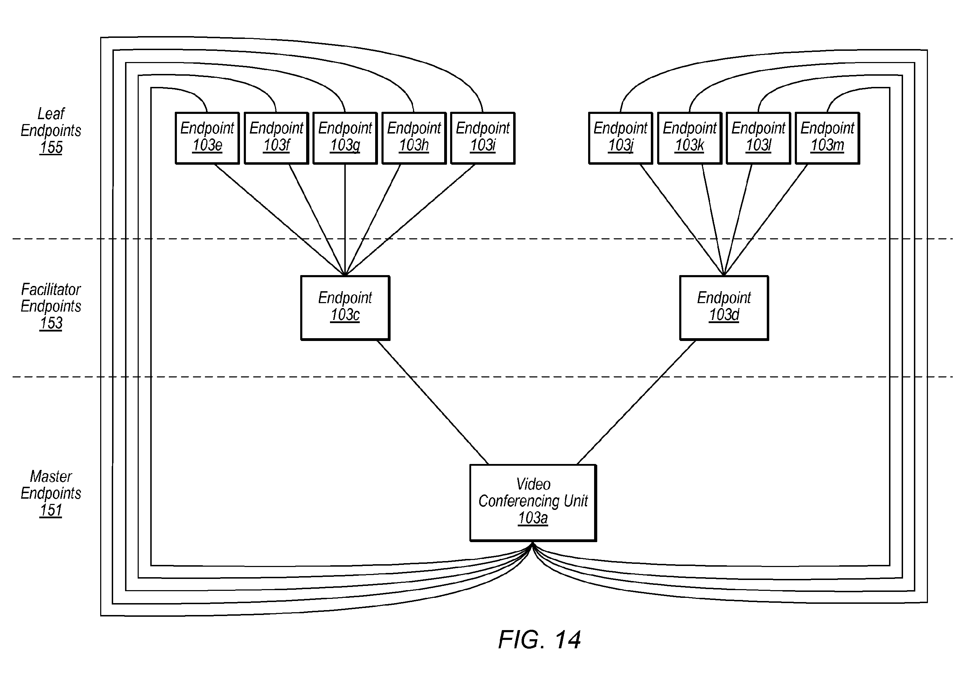

**FIG. 14** illustrates communication paths between master endpoints, facilitator endpoint, and leaf endpoints, according to an embodiment.

**FIGs. 15a****-b** illustrates video and audio signals between master endpoints, facilitator endpoints, and leaf endpoints, according to an embodiment.

**FIGs. 16a****-b** illustrate example videoconferencing units, according to various embodiments.

**FIG. 17** illustrates a flowchart of a method for displaying last N talkers, according to an embodiment.

**FIG. 18a** illustrates a flowchart of a method for extending endpoint resources, according to an embodiment.

**FIGs. 18b****-d** illustrate switching endpoint communications to a secondary endpoint, according to an embodiment.

**FIGs. 18e****-f** illustrate extended endpoint resources for multiple videoconference calls, according to an embodiment.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents, and alternatives falling within the spirit and scope of the present invention as defined by the appended claims. Note, the headings are for organizational purposes only and are not meant to be used to limit or interpret the description or claims. Furthermore, note that the word "may" is used throughout this application in a permissive sense (i.e., having the potential to, being able to), not a mandatory sense (i.e., must). The term "include", and derivations thereof, mean "including, but not limited to". The term "coupled" means "directly or indirectly connected".

### Detailed Description of the Embodiments

### Incorporation by Reference

U.S. Patent Application titled "Video Conferencing System Transcoder", serial number 11/252,238, which was filed October 17, 2005, whose inventors are Michael L. Kenoyer and Michael V. Jenkins, is hereby incorporated by reference in its entirety as though fully and completely set forth herein.

U.S. Patent Application titled "Speakerphone Supporting Video and Audio Features", serial number 11/251,086, which was filed October 14, 2005, whose inventors are Michael L. Kenoyer, Craig B. Malloy and Wayne E. Mock is hereby incorporated by reference in its entirety as though fully and completely set forth herein.

U.S. Patent Application titled "Virtual Decoders", serial number 12/142,263, which was filed June 19, 2008, whose inventors are Keith C. King and Wayne E. Mock, is hereby incorporated by reference in its entirety as though fully and completely set forth herein.

U.S. Patent Application titled "Video Conferencing System which Allows Endpoints to Perform Continuous Presence Layout Selection", serial number 12/142,302, which was filed June 19, 2008, whose inventors are Keith C. King and Wayne E. Mock, is hereby incorporated by reference in its entirety as though fully and completely set forth herein.

U.S. Patent Application titled "Video Conferencing Device which Performs Multi-way Conferencing", serial number 12/142,340, which was filed June 19, 2008, whose inventors are Keith C. King and Wayne E. Mock, is hereby incorporated by reference in its entirety as though fully and completely set forth herein.

U.S. Patent Application titled "Video Decoder which Processes Multiple Video Streams", serial number 12/142,377, which was filed June 19, 2008, whose inventors are Keith C. King and Wayne E. Mock, is hereby incorporated by reference in its entirety as though fully and completely set forth herein.

U.S. Patent Application titled "Virtual Multiway Scaler Compensation", serial number 12/171,358, which was filed July 11, 2008, whose inventors are Keith C. King and Wayne E. Mock, is hereby incorporated by reference in its entirety as though fully and completely set forth herein.

U.S. Patent Application titled "Integrated Videoconferencing System", serial number 11/405,686, which was filed April 17, 2006, whose inventors are Michael L. Kenoyer, Patrick D. Vanderwilt, Craig B. Malloy, William V. Oxford, Wayne E. Mock, Jonathan I. Kaplan, and Jesse A. Fourt is hereby incorporated by reference in its entirety as though fully and completely set forth herein.

U.S. Provisional Patent Application titled "Videoconferencing Endpoint Extension" (5896-11200), Serial Number 61/157,516, which was filed March 4, 2009, whose inventors are Keith C. King, Matthew K. Brandt, and Wayne E. Mock is hereby incorporated by reference in its entirety as though fully and completely set forth herein.

U.S. Provisional Patent Application titled "Virtual Distributed Multipoint Control Unit", Serial Number 61/157,511, which was filed on March 4, 2009, whose inventors are Keith C. King, Ashish Goyal, and Hrishikesh Gopal Kulkarni is hereby incorporated by reference in its entirety as though fully and completely set forth herein.

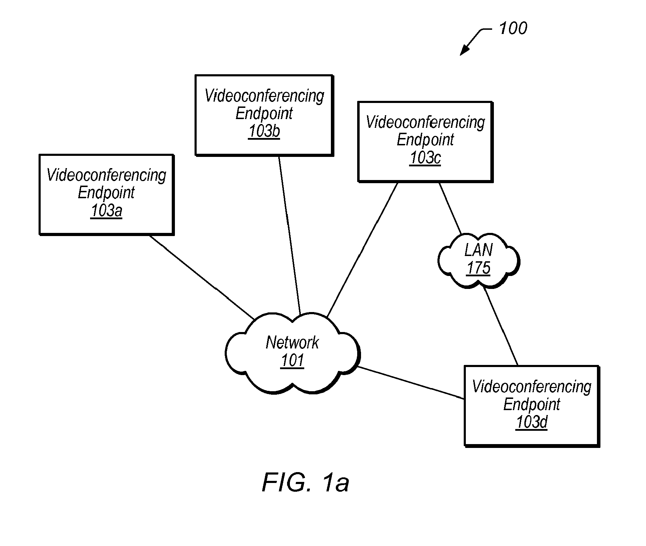

FIGs. 1a-c illustrate an embodiment of videoconferencing system network 100. FIGs. 1a-c illustrate an exemplary embodiment of videoconferencing system network 100 which may include network 101 and endpoints 103a-103d (e.g., videoconferencing systems) (other numbers of endpoints are also contemplated). Although not shown in FIGs. 1a-c, videoconferencing system network 100 may also include other devices, such as gateways, a service provider, conference units, and plain old telephone system (POTS) telephones, among others. Endpoints 103a - 103d (these and other endpoints described herein referred to generally as "endpoints 103") may be coupled to network 101 (e.g., via gateways (not shown)). Gateways may each include firewall, network address translation (NAT), packet filter, and/or proxy mechanisms, among others.

Endpoints 103 may include videoconferencing system endpoints (also referred to as "participant locations"). Each endpoint 103 may include a camera, display device, microphone, speakers, and a codec or other type of videoconferencing hardware. In some embodiments, endpoints 103 may include video and voice communications capabilities (e.g., videoconferencing capabilities) and include or be coupled to various audio devices (e.g., microphones, audio input devices, speakers, audio output devices, telephones, speaker telephones, etc.) and include or be coupled to various video devices (e.g., monitors, projectors, displays, televisions, video output devices, video input devices, cameras, etc). In some embodiments, endpoints 103 may include various ports for coupling to one or more devices (e.g., audio devices, video devices, etc.) and/or to one or more networks. Endpoints 103 may each include and/or implement one or more real time protocols, e.g., session initiation protocol (SIP), H.261, H.263, H.264, H.323, among others. In an embodiment, endpoints 103 may implement H.264 encoding for high definition (HD) video streams. In some embodiments, a Multipoint Control Unit (MCU) may function as a to receive video from two or more sources (e.g., endpoints 103) and provide video (e.g., with composite video images) to two or more recipients (e.g., endpoints 103). "MCU" as used herein is intended to have the full breath of its ordinary meaning. In some embodiments, one or more endpoints 103 may include embedded MCU functionality.

Network 101 may include a wide area network (WAN) such as the Internet. Network 101 may include a plurality of networks coupled together, e.g., one or more local area networks (LANs) coupled to the Internet. Network 101 may also include public switched telephone network (PSTN). Network 101 may also include an Integrated Services Digital Network (ISDN) that may include or implement H.320 capabilities. In various embodiments, video and audio conferencing may be implemented over various types of networked devices.

In some embodiments, endpoints 103a-103d may each include various wireless or wired communication devices that implement various types of communication, such as wired Ethernet, wireless Ethernet (e.g., IEEE 802.11), IEEE 802.16, paging logic, RF (radio frequency) communication logic, a modem, a digital subscriber line (DSL) device, a cable (television) modem, an ISDN device, an ATM (asynchronous transfer mode) device, a satellite transceiver device, a parallel or serial port bus interface, and/or other type of communication device or method.

In various embodiments, the methods and/or systems described may be used to implement connectivity between or among two or more participant locations or endpoints, each having voice and/or video devices (e.g., endpoints 103a-103d) that communicate through network 101.

In some embodiments, videoconferencing system network 100 (e.g., endpoints 103a-d) may be designed to operate with network infrastructures that support T1 capabilities or less, e.g., 1.5 mega-bits per second or less in one embodiment, and 2 mega-bits per second in other embodiments (other capacities (e.g., 6 mega-bits per second, greater than 10 mega-bits per second) are also contemplated). The videoconferencing system may support HD capabilities. The term "high resolution" includes displays with resolution of 1280 x 720 pixels and higher. In one embodiment, high-definition resolution may include 1280 x 720 progressive scans at 60 frames per second, or 1920 x 1080 interlaced or 1920 x 1080 progressive. Thus, an embodiment of the present invention may include a videoconferencing system with HD "e.g. similar to HDTV" display capabilities using network infrastructures with bandwidths T1 capability or less. The term "high-definition" is intended to have the full breath of its ordinary meaning and includes "high resolution".

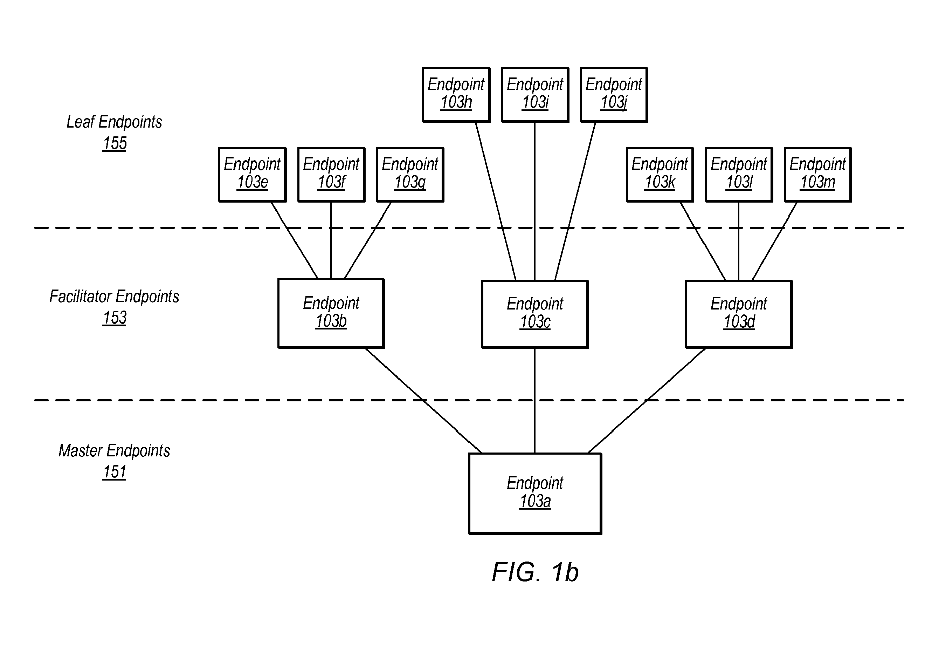

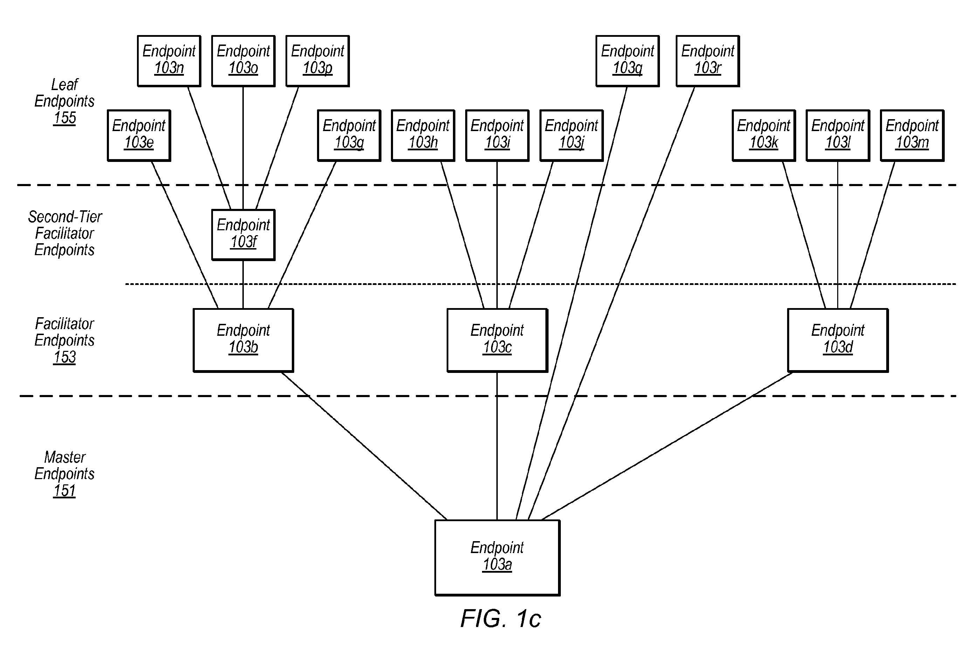

FIGs. 1a, 1b, and 1c illustrate configurations of videoconferencing networks. The videoconferencing networks may be operable to perform discovery, e.g., using one or more videoconferencing application(s) stored by videoconferencing systems in the network. As shown in FIG. 1a, endpoints 103a-d may be connected via network 101 (e.g., a wide area network such as the Internet) and endpoints 103c and 103d may be coupled over a local area network (LAN) 175. The networks may be any type of network (e.g., wired or wireless) as desired. These videoconferencing systems may discover each other according to embodiments described below, among others.

FIG. 1b illustrates an embodiment of relationships among videoconferencing system endpoints 103. As shown, endpoint 103a may be aware of endpoints 103b-d, each of which may be aware of further endpoints (e.g., 103e-g, 103h-j, and 103k-m respectively). FIG. 1c illustrates another embodiment showing multiple tiers of facilitator endpoints 153 (e.g., second tier facilitator endpoint 103f). Endpoint 103a may be operable to automatically discover one or more of endpoints 103e-m according to the methods described in U.S. Patent Application titled "Videoconferencing System Discovery", serial number 11/858,342, which was filed September 20, 2007, whose inventor is Matthew K. Brandt and which is hereby incorporated by reference in its entirety as though fully and completely set forth herein. In a similar manner, each of the other endpoints 103 shown in FIG. 1b, such as endpoint 103h, may be able to automatically discover a subset or all of the other ones of the endpoints 103 shown in FIG. 1b.

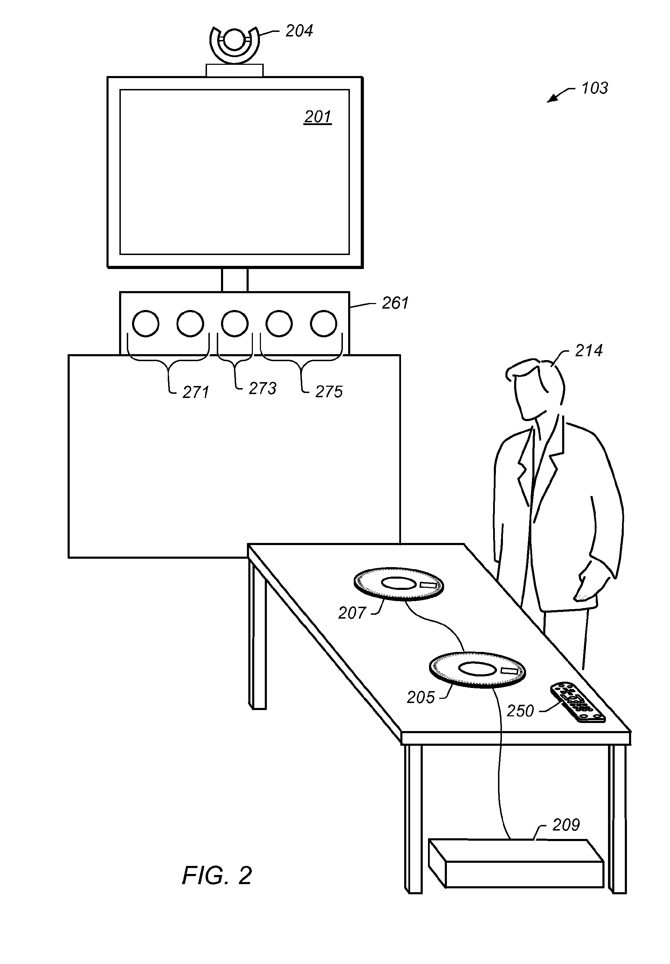

FIG. 2 illustrates an exemplary embodiment of videoconferencing system endpoint 103 (e.g., endpoint 103a), also referred to as a videoconferencing system, videoconferencing unit, or participant location. Endpoint 103 may have system codec box 209 to manage both speakerphones 205/207 and the videoconferencing hardware (e.g., camera 204, speakers 271, 273, 275, etc). Speakerphones 205/207 and other videoconferencing system components may be coupled to codec box 209 and may receive audio and/or video data from system codec box 209.

In some embodiments, endpoint 103 may include camera 204 (e.g., an HD camera) for acquiring video images of the participant location (e.g., of participant 214). Other cameras are also contemplated. Endpoint 103 may also include display 201 (e.g., an HDTV display). Images acquired by the camera 204 may be displayed locally on display 201 and may also be encoded and transmitted to other endpoints 103 in the videoconference.

Endpoint 103 may also include sound system 261. Sound system 261 may include multiple speakers including left speakers 271, center speaker 273, and right speakers 275. Other numbers of speakers and other speaker configurations may also be used. Endpoint 103 may also use one or more speakerphones 205/207 which may be daisy chained together.

In some embodiments, the videoconferencing endpoint components (e.g., camera 204, display 201, sound system 261, and speakerphones 205/207) may be coupled to system codec ("compressor / decompressor") box 209. System codec box 209 may be placed on a desk or on a floor. Other placements are also contemplated. System codec box 209 may receive audio and/or video data from a network (e.g., network 101). System codec box 209 may send the audio to speakerphone 205/207 and/or sound system 261 and the video to display 201. The received video may be HD video that is displayed on an HD display. System codec box 209 may also receive video data from camera 204 and audio data from speakerphones 205/207 and transmit the video and/or audio data over network 101 to another videoconferencing system endpoint 103. Videoconferencing system endpoint 103 may be controlled by a participant through the user input components (e.g., buttons) on speakerphones 205/207 and/or remote control 250. Other system interfaces may also be used.

In various embodiments, system codec box 209 may implement a real time transmission protocol. In some embodiments, system codec box 209 may include any system and/or method for encoding and/or decoding (e.g., compressing and decompressing) data (e.g., audio and/or video data). In some embodiments, system codec box 209 may not include one or more of the compressing/decompressing functions. In some embodiments, communication applications may use system codec box 209 to convert an analog signal to a digital signal for transmitting over various digital networks (e.g., network 101, PSTN, the Internet, etc.) and to convert a received digital signal to an analog signal. In various embodiments, codecs may be implemented in software, hardware, or a combination of both. Some codecs for computer video and/or audio may include MPEG, Indeo™, and Cinepak™, among others.

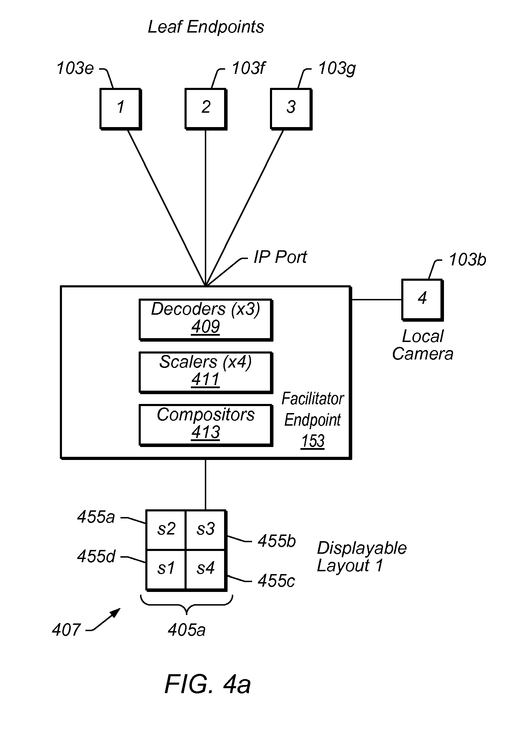

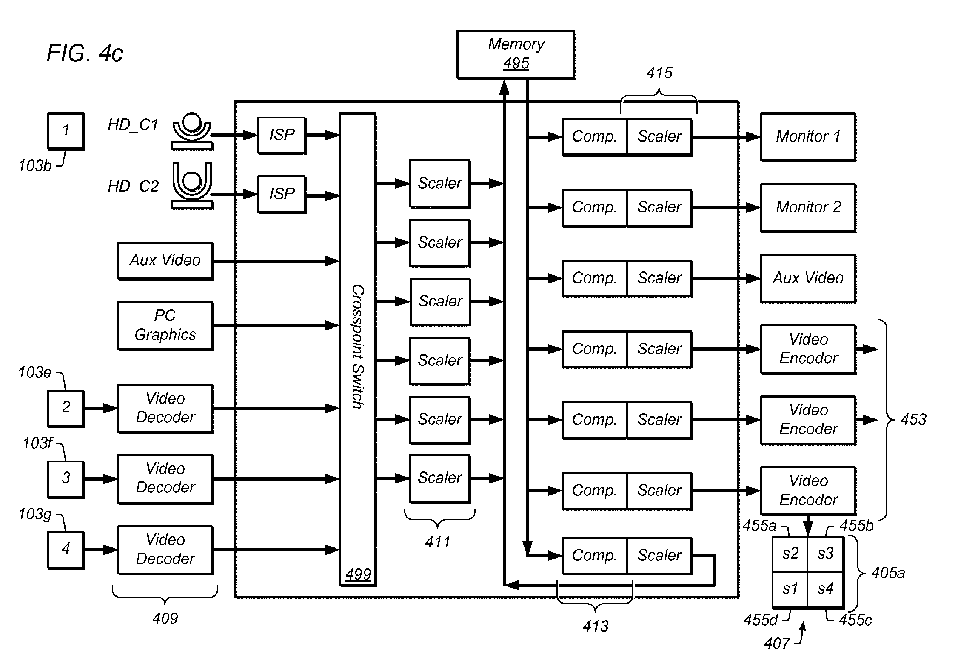

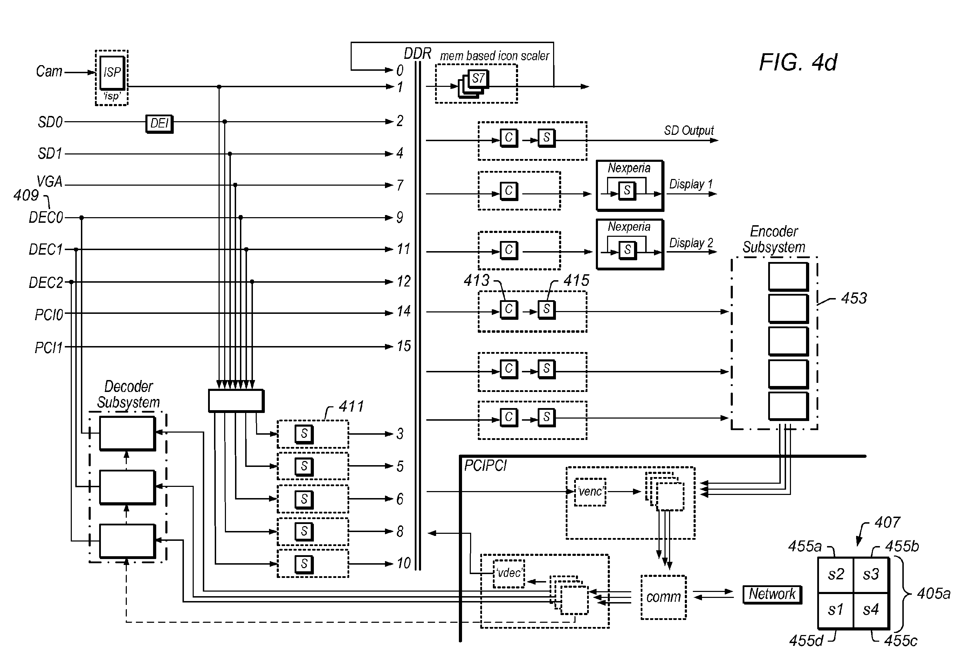

In some embodiments, endpoint 103 may capture a local image of the local participants and provide a video stream (e.g., to another endpoint 103). In some embodiments, endpoint 103 may create composite video image 407 (e.g., see FIGs. 4a-d) of two or more of the received video streams and provide composite video image 407 to each of endpoints 103. Composite video image 407 may have certain layout 405. According to one embodiment, endpoint 103 may also generate coordinate information (or metadata) that describes the locations of the various images in composite video image 407. Endpoint 103 may use the coordinate information to separate out the plurality of images from composite video image 407, and then generate new composite video image having a new layout, e.g., as specified by the user. Endpoint 103 may also use a virtual decoder technique in separating out received composite video image 407, as described below.

Videoconferencing system 103 may execute various videoconferencing application software that presents a graphical user interface (GUI) on display 201. The GUI may be used to present an address book, contact list, list of previous callees (call list) and/or other information indicating other videoconferencing system endpoints 103 that the user may desire to call to conduct a videoconference. In one embodiment, videoconferencing system endpoint 103 may include software for performing automatic discovery of other videoconferencing system endpoints 103, and for populating this discovered information into the videoconferencing application address book, contact list, etc.

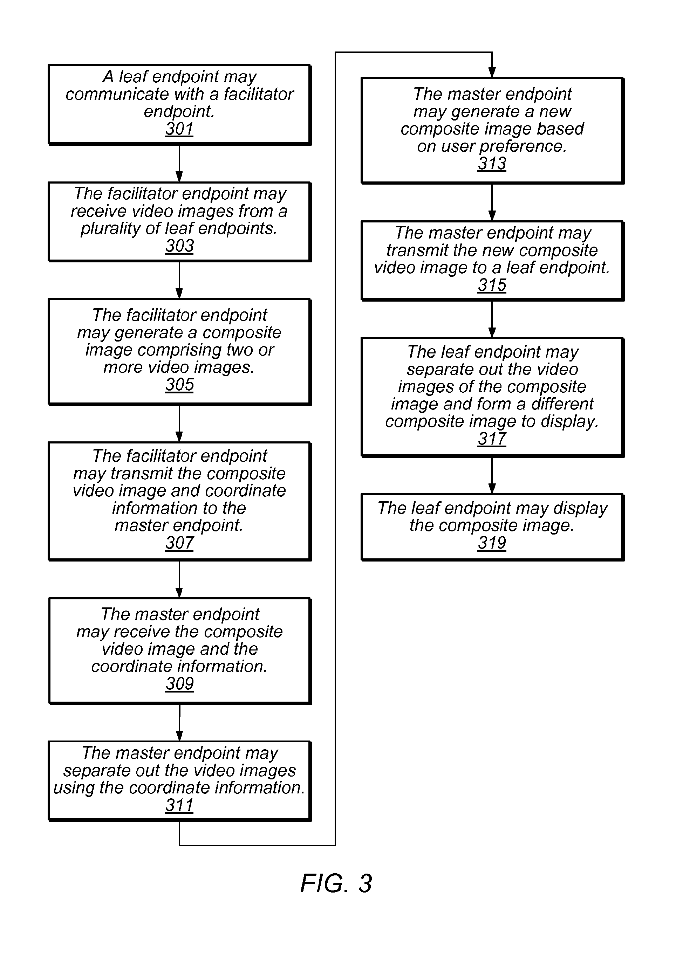

FIG. 3 illustrates a flowchart of a method for implementing a distributed virtual multipoint control unit to support a videoconference between leaf endpoints 155 using at least one facilitator endpoint 153 and master endpoint 151, according to an embodiment. In the various embodiments, endpoints 103 may serve as leaf endpoints 155, facilitator endpoints 153, and/or master endpoints 151. Endpoint 103 may be designated as master endpoint 151 or facilitator endpoint 153 by a user. Other designations are also contemplated (e.g., endpoint 103 receiving a call request for a videoconference may become master endpoint 151 for the videoconference (e.g., until different endpoint 103 is designated as master endpoint 151)).

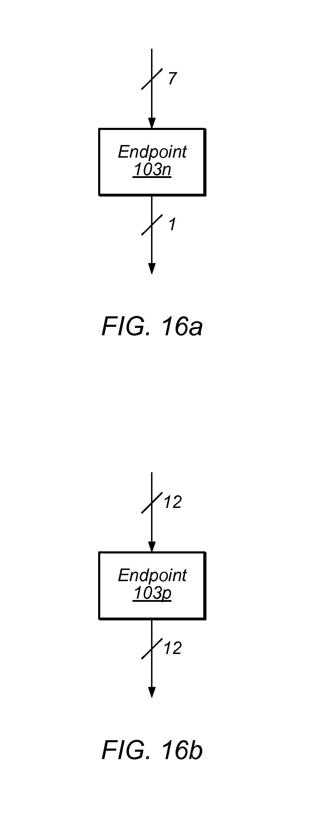

In some embodiments, master endpoint 151 may facilitate a videoconference call between multiple leaf endpoints 155 through one or more facilitator endpoints 153 (e.g., see FIGs. 1b-c). In some embodiments, participants may also participate in the videoconference at facilitator endpoints 153 and/or master endpoint 151 (which may also include a camera and/or microphones). Together, master endpoint 151 and facilitator endpoints 153 may operate as a distributed virtual multipoint control unit to perform multipoint control unit functions in a distributed and easily expandable manner. While the terms "leaf endpoint", "facilitator endpoint" and "master endpoint" are used to refer to endpoints performing various functions in the videoconference, it is to be understood that the "leaf endpoints", "facilitator endpoints" and "master endpoints" may include substantially similar videoconferencing systems. For example, in one embodiment, each of the "leaf endpoints", "facilitator endpoints" and "master endpoints" may be operable to receive 3 input signals and provide two output signals. Other numbers of input and output signal capabilities are also contemplated. For example, as seen in FIG. 16a, an endpoint may have 7 inputs and 1 output or as seen in FIG. 16b, an endpoint may have 12 inputs and 12 outputs. In some embodiments, the "leaf endpoints", "facilitator endpoints" and "master endpoints" may have different capabilities (e.g., each leaf endpoint 155 may have one input signal and one output signal and each master endpoint 151 may have 5 input signals and 10 output signals). Other capabilities are also contemplated. It should be noted that in various embodiments of the methods described below, one or more of the elements described may be performed concurrently, in a different order than shown, or may be omitted entirely. Other additional elements may also be performed as desired.

At 301, leaf endpoint 155 may communicate with facilitator endpoint 153 (e.g., through network 101). In some embodiments, leaf endpoint 155 may call master endpoint 151 and master endpoint 151 may redirect leaf endpoint 155 to facilitator endpoint 153 (e.g., by providing an Internet Protocol (IP) address of facilitator endpoint 153). In some embodiments, leaf endpoint 155 may call facilitator endpoint 153 directly. For example, leaf endpoint 155 may have been provided the facilitator endpoint IP address in advance of the videoconference call. In some embodiments, control software implemented by master endpoint 151, facilitator endpoint 153, and/or leaf endpoint 155 may pre-determine a conference configuration and may send the appropriate facilitator endpoint identification and/or contact information to leaf endpoints 155 prior to the videoconference call. For example, call statistics (e.g., call days/times, call lengths, number of participants per call, etc.) for multiple endpoints 103 may be maintained and used to predict which endpoints 103 may be available at the time of a scheduled conference call (e.g., call statistics may indicate that particular endpoint 103 is usually not being used on Thursday afternoons and, therefore, that endpoint 103 may be potential endpoint 103 to use for a videoconference call on Thursday afternoon). As another example, collected call statistics may indicate that endpoint 103 with 10 outputs usually has at least 5 available outputs in the mornings between 9am and 10am. This availability may make this endpoint 103 a potential endpoint 103 for 5 outputs for videoconference calls scheduled between 9am and 10am. In some embodiments, control software may analyze call statistics to determine potential endpoints 103 to use and/or reserve for a conference call. Other call statistic embodiments are also contemplated. In some embodiments, control software may determine specific master endpoint 151, facilitator endpoints 153, etc. for future calls or as calls are being received by master endpoint 151 during the videoconference call. In some embodiments, call statistics may also be used to reconnect endpoints 103 during a videoconference call to a different facilitator (or master) endpoint. For example, if facilitator endpoint 153 becomes unavailable, master endpoint 151 may reassign leaf endpoints 155 communicating through facilitator endpoint 153 to different facilitator endpoint 153.

In some embodiments, leaf endpoint 155 may transparently be transferred to facilitator endpoint 153 such that a user may not be immediately aware that the call has been transferred. In some embodiments, leaf endpoint 155 may be automatically connected to facilitator endpoint 153 according to a predetermined call configuration. A transfer and/or automatic call set-up may be transparent to a conference participant such that the conference participant may not need to take any actions to facilitate the virtual distributed call. In some embodiments, leaf endpoint 155 may provide one or more operating characteristics to facilitator endpoint 153 (e.g., resolution, audio encoding format, etc.) or the operating characteristics may be provided to facilitator endpoint 153 by master endpoint 151 (e.g., before or during transfer process).

In some embodiments, leaf endpoints 155 may participate in the videoconference by communicating with the master endpoint 151 (e.g., without communicating through a facilitator endpoint 153). In some embodiments, if a first leaf endpoint is communicating with the master endpoint 151 in the videoconference and a second leaf endpoint calls into the first leaf endpoint, the first leaf endpoint may be converted into a facilitator endpoint 153 for the videoconference. In some embodiments, the first leaf endpoint may thus support an MCU mode to support multiple leaf endpoints 155. The master endpoint 151 may consider the first leaf endpoint to be a facilitator endpoint 153.

At 303, facilitator endpoint 153 may receive video images from one or more leaf endpoints 155. Leaf endpoints 155 may be remote or local and the video may include video (e.g., from cameras) or presentations (e.g., from a Microsoft Powerpoint™ presentation). In some embodiments, multiple levels of facilitator endpoints 153 may be involved in the videoconference (e.g., as seen in FIG. 1c, endpoint 103f may serve as facilitator endpoint 153 for leaf endpoints 103n-p and may connect to master endpoint 151 through separate facilitator endpoint 103b). In some embodiments, leaf endpoints 155 may connect to master endpoint 151 without intervening facilitator endpoint 153 (e.g., endpoints 103q-r in FIG. 1c). In some embodiments, facilitator endpoint 153 (and/or master endpoint 151) may also provide video/audio to participants local to the facilitator endpoint 153 and/or master endpoint 151 in the videoconference call. For example, participants may interact with the videoconference at facilitator endpoint 153 and/or master endpoint 151 through videoconferencing equipment (e.g., cameras, monitors, speakers, etc.) attached to respective facilitator endpoint 153 and/or master endpoint 151. In some embodiments, video packet loss may be managed between the master endpoint 151 and the facilitator endpoint 153 and/or leaf endpoint 155 that sent the frame experiencing packet loss. For example, if video packet loss is detected by master endpoint 151, master endpoint 151 may request facilitator endpoint 153 or leaf endpoint 155 that sent the frame experiencing the packet loss to resend the video frame to the master endpoint 151. Packet loss may also be managed by facilitator endpoint 153 and/or leaf endpoint 155. For example, if video packet loss is detected by facilitator endpoint 153 in a video frame sent by leaf endpoint 155 communicating with facilitator endpoint 153, facilitator endpoint 153 may request leaf endpoint 155 to resend the video frame. If video packet loss is detected by the leaf endpoint 155 (e.g., in a video frame sent by master endpoint 155 or leaf endpoint 153), leaf endpoint 155 may request the video frame be resent (e.g., leaf endpoint 155 may request corresponding master endpoint 151 or facilitator endpoint 153 to resend the video frame).

In some embodiments, facilitator endpoint 153 may use one or more decoders 409 to decode received video images 455 from respective leaf endpoints 155. For example, video packets for the video frames including respective received video images 455 may be assembled as they are received (e.g., over an Internet Protocol (IP) port) into facilitator endpoint 153. FIGs. 4a-d illustrate embodiments of facilitator endpoints 153.

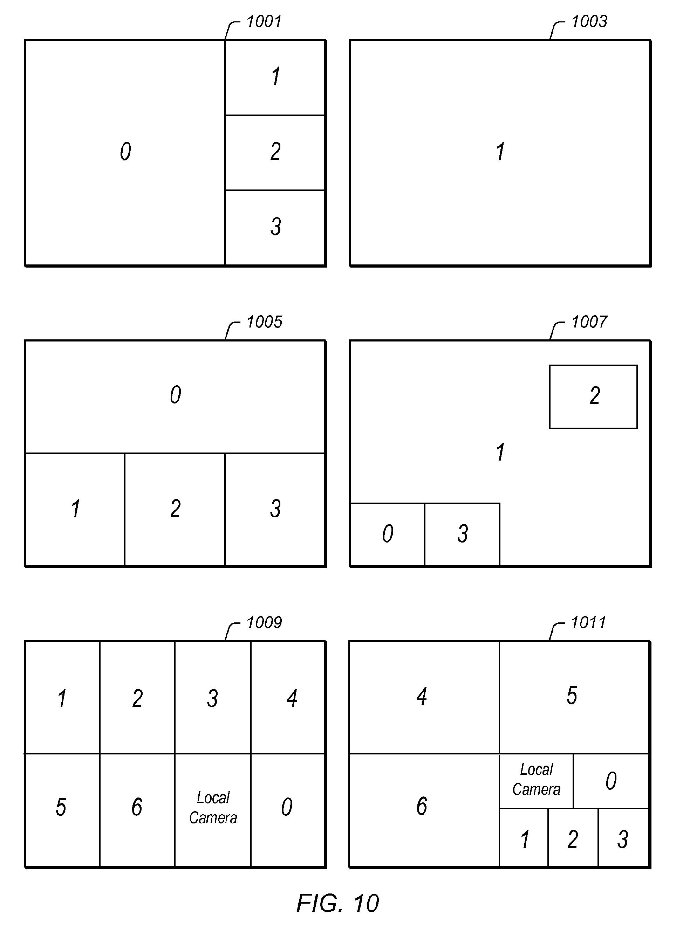

In some embodiments, facilitator endpoint 153 may also receive video image layout preferences from one or more of leaf endpoints 155. For example, leaf endpoint 155 may receive a video image layout preference from one or more videoconferencing participants (e.g., through a menu on an on-screen interface) and may transmit that preference to facilitator endpoint 153. In some embodiments, a button on remote 250 may allow a videoconference participant to cycle through two or more available layout preferences. The video image layout preference may include a layout type (e.g., layout 1001, 1003, 1005, 1007, 1009, or 1011 as seen in FIG. 10). Other layout types are also possible. The video image layout preference may specify which endpoint's video image to place in each of the available layout positions (e.g., which endpoint video image should be placed in the main layout position and which endpoint video images should be placed in the other layout positions). In some embodiments, facilitator endpoint 153 may not receive a video image layout preference from one or more leaf endpoints 155. In some embodiments, the video image layout may be generated at facilitator endpoint 153 or master endpoint 151. For example, control software implemented on facilitator endpoint 153 or master endpoint 151 may determine which leaf endpoint 155 has the current speaker and may place the corresponding video image in a main video image window of the layout (e.g., with other endpoint video images arranged around the main video image). Other layout selections means are also contemplated.

In some embodiments, facilitator endpoint 153 may also be operable to receive other information from leaf endpoints 155. For example, leaf endpoints 155 may send data to facilitator endpoint 153 to move a far end camera (e.g., on another leaf endpoint 155). Facilitator endpoint 153 may subsequently transmit this information to respective leaf endpoint 155 to move the far end camera.

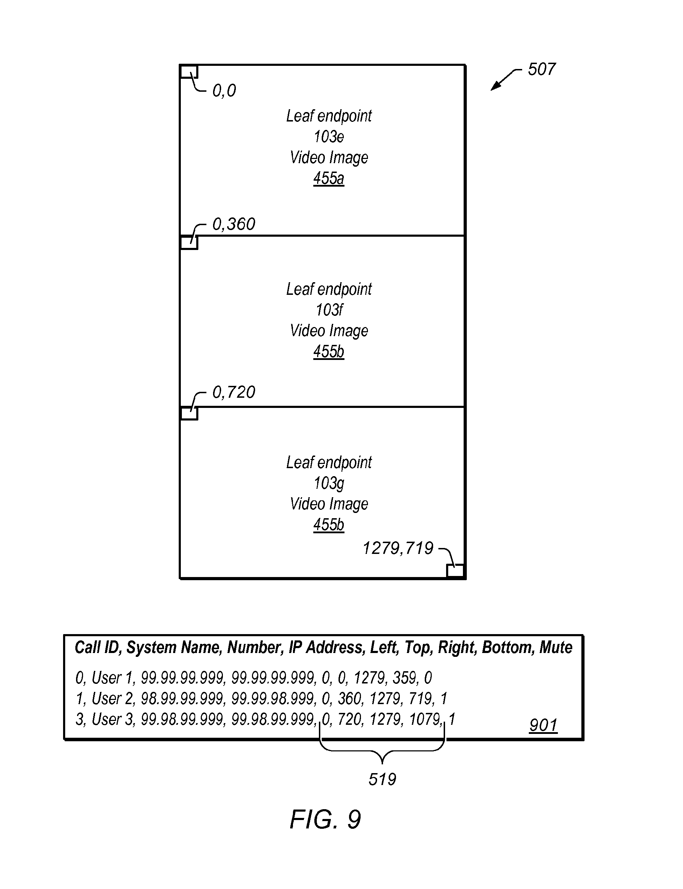

At 305, facilitator endpoint 153 may generate composite video image 407 with two or more video images 455 (e.g., from leaf endpoints 155 and/or from facilitator endpoint 153). In some embodiments, facilitator endpoint 153 may have multiple scalers 411 and compositors 413 to scale received video images 455 and composite two or more of video images 455 (e.g., from leaf endpoints 155) into, for example, layout 405a. In some embodiments, layout 405a may include video image 455 from each endpoint 103 communicating with facilitator endpoint 153 (e.g., each leaf endpoint 155 and/or facilitator endpoint 153). In some embodiments, layout 405a may be in a predetermined format. For example, if connected to three leaf endpoints 155, the video image of each leaf endpoint 155 may be scaled to a 1280 by 360 (pixel) image and composite video image 407 (e.g., including the three images stacked as seen in FIG. 9) may have dimensions of 1280 by 1080. Other formats are also contemplated.

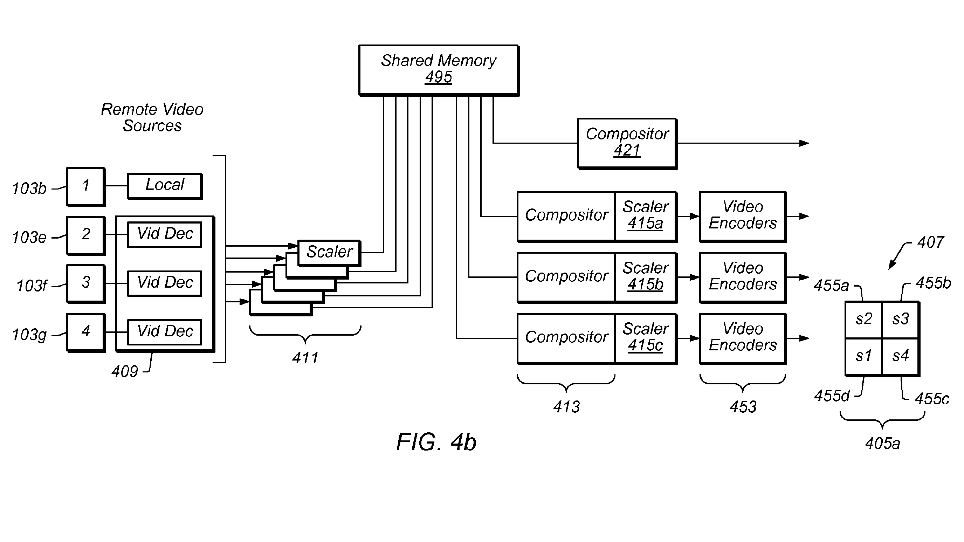

In some embodiments, scalers 411 may be coupled to video decoders 409 (e.g., through crosspoint switch 499 shown in FIG. 4b) that decode video images 455 from the various video sources (e.g., endpoints 103). Scalers 411 may scale video images 455 after video images 455 are decoded. In some embodiments, one or more of video images 455 may not be scaled. For example, the two or more video images 455 may be rearranged into composite video image 407 without being scaled. In some embodiments, scalers 411 may be 7-15 tap scalers. Scalers 411 may use linear combinations (e.g., with similar or different coefficients) of a plurality of pixels in video image 455 for each pixel scaled. Other scalers 411 are also contemplated. In some embodiments, video images 455 may be stored in shared memory 495 after being scaled.

In some embodiments, compositors 413 may access video images 455 (e.g., from shared memory 495) to form composite video images 407. In some embodiments, the output of compositors 413 may again be scaled (e.g., by scalers 415) prior to being encoded by video encoders 453. The video data received by scalers 415 may be scaled according to the resolution requirements of the master endpoint 151. In some embodiments, the output of compositor 413 may not be scaled prior to being encoded and transmitted to the master endpoint 151. In some embodiments, composite video image layout 405a may be transmitted as video frame 507 through video stream 500 to the master endpoint 151.

In some embodiments, facilitator endpoint 153 may determine the coordinates of video images 455 in composite video image layout 405a. For example, coordinate information 519 may indicate the start/stop locations of one or more of video images 455 in video frame 507. This coordinate information 519 may be stored on facilitator endpoint 153. In some embodiments, the coordinates may be predetermined. For example, a standard format with standard start/stop coordinates may be used for the images in composite video image 407 such that coordinate information 519 may not need to be sent to receiving master endpoint 151 that is expecting composite video image 407 in the standard format.

At 307, facilitator endpoint 153 may transmit composite video image 407 and coordinate information 519 to master endpoint 151. In some embodiments, facilitator endpoint 153 may not transmit coordinate information 519 to master endpoint 151 (e.g., if composite video image 407 is in a standard format). Coordinate information 519 may identify the locations of specific video images 455 in received composite video image layout 405a. In some embodiments, coordinate information 519 may be transmitted as metadata 901 with composite video image layout 405a. Metadata 901 may include coordinate information 519 for video frame 507a with the start (and/or stop) information for respective video images 455 (e.g., video image boundaries and/or pixel start/stop points) corresponding to leaf endpoints 155 (and/or facilitator endpoint 153). Metadata 901 may also include attributes of each of the plurality of leaf endpoints 155 including identifying information respective to corresponding endpoints 103 for each video image 455. Other information in metadata 901 is also contemplated. In some embodiments, coordinate information 519 may be sent in a form other than metadata.

In some embodiments, facilitator endpoint 153 may send composite video image 407 to another facilitator endpoint (e.g., see endpoints 103f and 103b in FIG. 1c operating as facilitator endpoints). The second facilitator endpoint may access one or more video images in the composite video image (e.g., using coordinate information 519) for putting in a new composite video image (e.g., to send to master endpoint 151) or the second facilitator endpoint may put the composite video image into the new composite video image (and may pass the new composite video image and subsequent coordinate information to master endpoint 151).

At 309, master endpoint 151 may receive composite video image 407 and coordinate information 519 (e.g., in metadata 901). For example, video frame 507a including two or more video images 455 may be received. Video frame 507a may be received as a series of video packets 503a in video stream 500a at decoder 515a. Decoder 515a may assemble video packets 503a into their respective video frames 507a for further processing in virtual decoder 517a. As noted above, in some embodiments, coordinate information 519 may not be received with composite video image 407.

At 311, master endpoint 151 may separate out video images 455 using coordinate information 519. Virtual decoders 517a at master endpoints 151 may separate continuous presence layout 405a into two or more separate video images 455. In some embodiments, coordinate information 519 may be used to find video image boundaries of video images 455 within video frame 507a. In some embodiments, coordinate information 519 may be used to determine where video images 455 start and stop in video frame 507a. These start/stop locations may be used by virtual decoder 517a to separate video images 455 from video frame 507a. In some embodiments, the separate video images 455 may be defined and/or scaled out of composite video image 405a. For example, coordinate information 519 may be used by virtual decoder 517a to crop respective video images 455 (e.g., video images 455a and 455b) in video frame 507a. FIG. 9 illustrates an example of a use of coordinate information 519 to locate the boundaries of three video images (e.g., video images 455a-c) in order to separate video images 455. For example, leaf endpoint video image 455a may have a left boundary at 0, a top boundary at 0, a right boundary at 1279, and a bottom boundary at 359. Similarly, leaf endpoint video image 455b may have a left boundary at 0, a top boundary at 360, a right boundary at 1279, and a bottom boundary at 719. Coordinate information 519 (e.g., boundary information) for other video images (e.g., video image 455b) may also be provided (e.g., in metadata 901). In some embodiments, the three video images may be "stacked" in time (e.g., sent/received sequentially but not in the same composite video image 407). Other embodiments of compositing images are also contemplated.

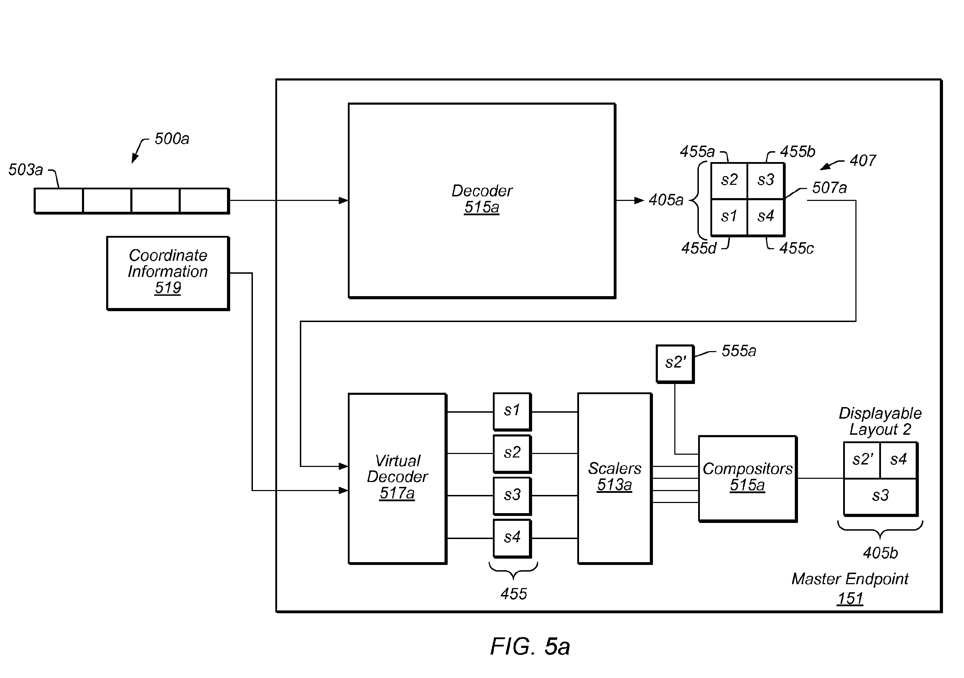

While three video images 455 are shown with respect to video frame 507a, it is noted that video frame 507a may include other combinations of two or more video images 455 and video images 455 may be in a different layout than shown in FIG. 5a. For example, video frame 507a may include two video images (e.g., each 640 by 360 pixels) arranged side by side in a 1280 by 360 pixel video frame. Video frame 507a may then be separated into two 640 by 360 pixel video images. Other video image/video frame configurations are also contemplated.

In some embodiments, separating video images 455 may include, for example, storing separated video images 455 in separate locations of a memory. In some embodiments, separating video images 455 may include storing start and/or stop locations of separated video images 455 in a memory. Other means for separating video images 455 are also contemplated.

In some embodiments, virtual decoder 517a may be implemented as a software abstraction on hardware such as a field programmable gate-array (FPGA) or other processor. In some embodiments, one or more virtual decoders 517a may be implemented on a single ASIC (Application Specific Integrated Chip). Other virtual decoder configurations are also contemplated. In some embodiments, a separate processor may implement virtual decoder 517a by issuing commands to reprogram at least one FPGA to implement virtual decoder 517a. Other configurations are also contemplated.

At 313, master endpoint 151 may generate a composite video image (e.g., composite video image 405b) including two or more video images 455 (e.g., from leaf endpoints 155). In some embodiments, master endpoint 151 may have multiple scalers 513a and compositors 515a to scale received video images 455 and composite two or more of video images 455 from leaf endpoints 155 into, for example, a new composite layout 405b. In some embodiments, the video images in the new composite layout 405b may originate from leaf endpoints 155 communicating directly with the master endpoint 151 or communicating with the master endpoint 151 through a facilitator endpoint 153. In some embodiments, the video images composited into new composite layout 405b may be provided by separate facilitator endpoints (each communicating with different leaf endpoints 155). For example, the respective composite video images from two or more facilitator endpoints 153 may be separated and selected video images from these composite video images may be composited into the new composite video layout 405b by the master endpoint 151.

In some embodiments, master endpoint 151 may composite video images 455 into one or more respective video image layouts (e.g., as requested by respective leaf endpoints 155). For example, master endpoint 151 may composite two or more of received video images 455 into composite video image 405b (which may include video images 455 separated from the video frame 507a, scaled by scalers 513a and composited by compositors 515a). In some embodiments, the new composite video image 405b may include a local image 555a (e.g., from a camera local to master endpoint 151). In some embodiments, master endpoint 151 may form multiple composite video image layouts according to respective received video image layout preferences. In some embodiments, one composite video image layout may be formed for all of the conference participants.

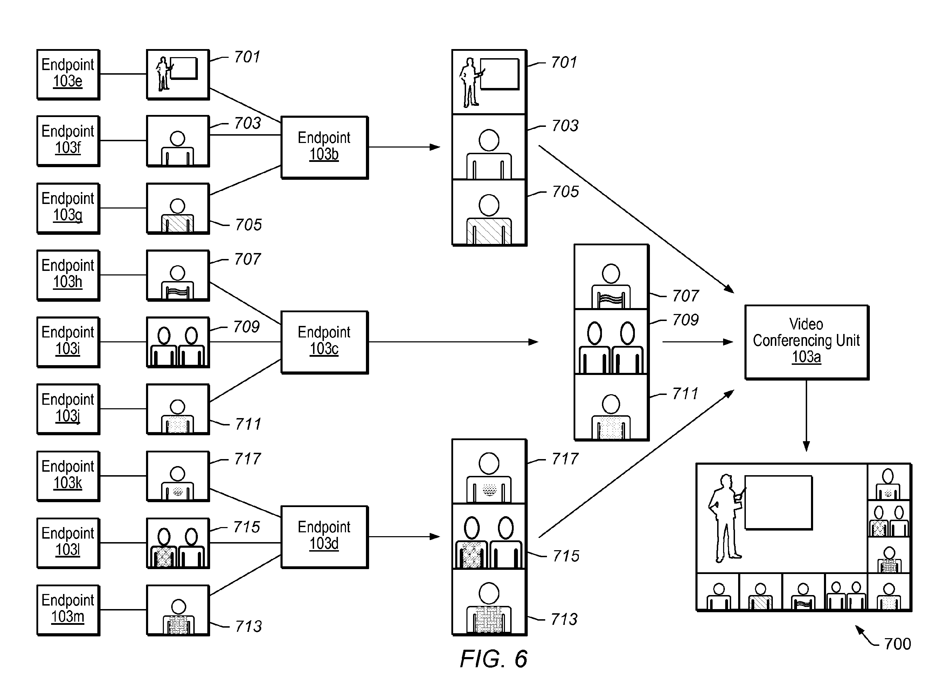

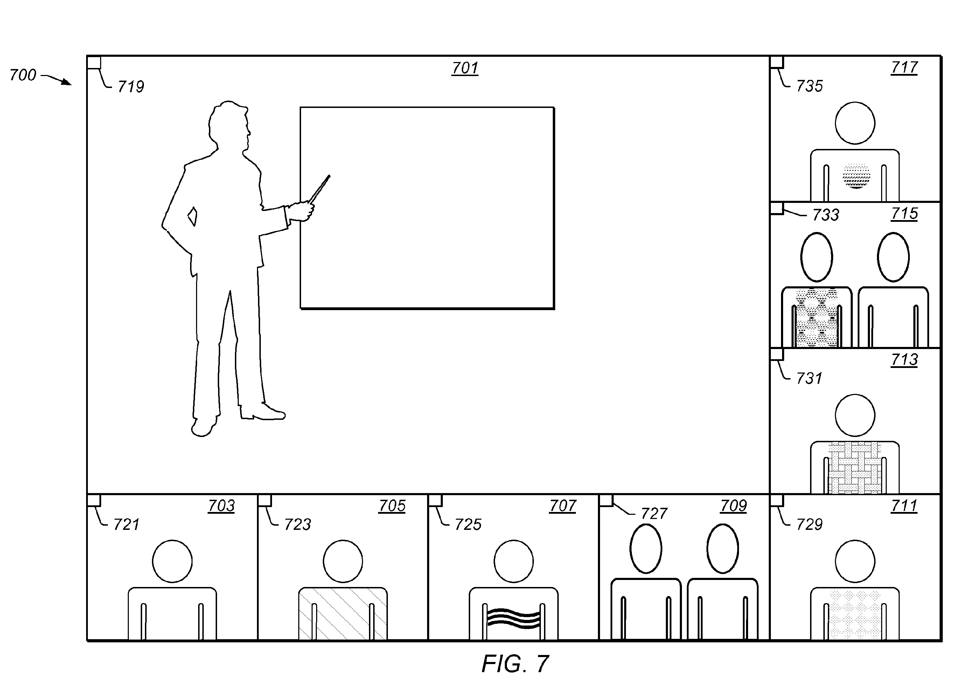

As seen in FIGs. 6 and 7, example composite layouts 700 may include nine video images 701, 703, 705, 707, 709, 711, 713, 715, and 717 originating from respective endpoints 103e-m (e.g., video image 701 from endpoint 103e, video image 703 from endpoint 103f, etc). Composite layout 700 may include main video image 701 of the endpoint with the current speaker and one or more side video images (e.g., side video images 703-717) of other endpoints participating in the videoconference.

At 315, master endpoint 151 may transmit composite video image layout 405b and coordinate information 519 to one or more leaf endpoints 155. In some embodiments, master endpoint 151 may transmit composite video image layout 405b to each leaf endpoint directly (e.g., through network 101). In some embodiments, master endpoint 151 may transmit composite video image layout 405b to leaf endpoints 155 through respective facilitator endpoints 153.

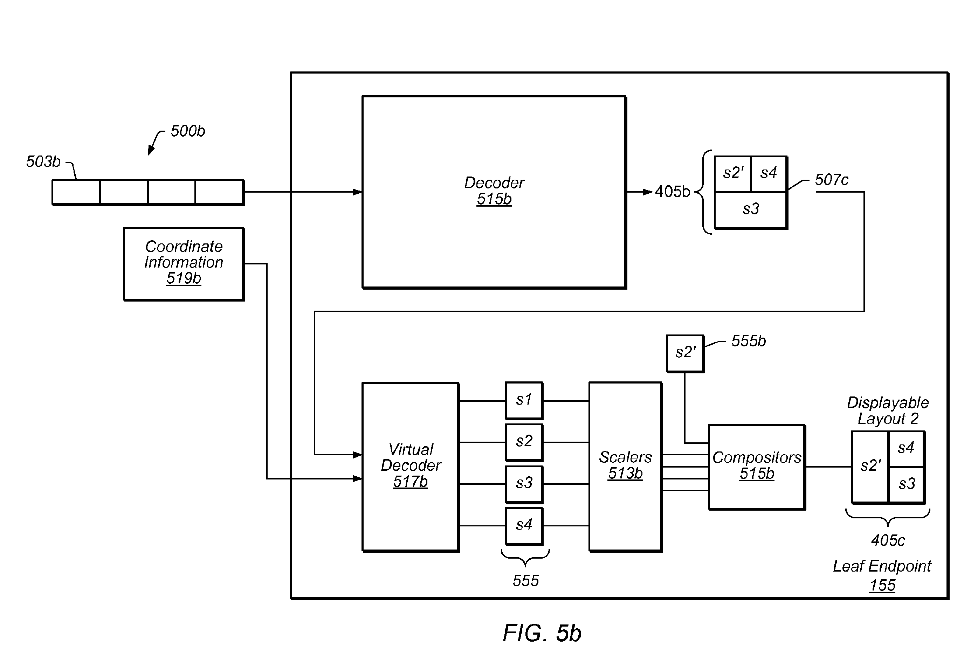

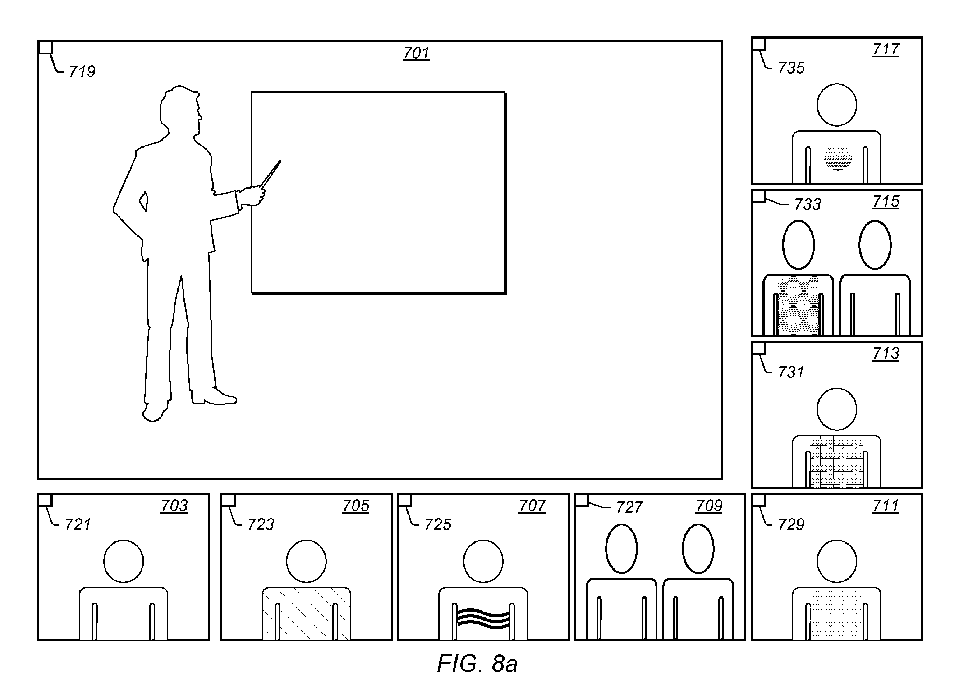

At 317, leaf endpoint 155 may separate out video images 455 of composite video image 405b and form different composite video image layout 405c to display (e.g., see FIG. 5b). For example, leaf endpoint 155 may generate new composite video image layout 405c based, for example, on user preference. As seen in FIG. 8a, coordinate information 519 for coordinates 719-735 may be sent with the composite layout video frame and used by virtual decoder 517b (e.g., at leaf endpoint 155) to separate video images 455 into separated video images. In some embodiments, one or more of the separated video images may be provided to one or more scalers 513b. The video images (including scaled video images, if any) may then be provided to one or more compositors 515b. One or more compositors 515b may composite video images 555 into video image layout 405c requested by a local participant through leaf endpoint 155. In some embodiments, local participant may cycle through the layout offerings from leaf endpoint 155 (e.g., by clicking an icon to cycle to the next available layout). In some embodiments, scalers 513b and compositors 515b may be implemented in hardware or software. In some embodiments, icon scalers may be used (e.g., if all of the endpoint's other scalers are being used).

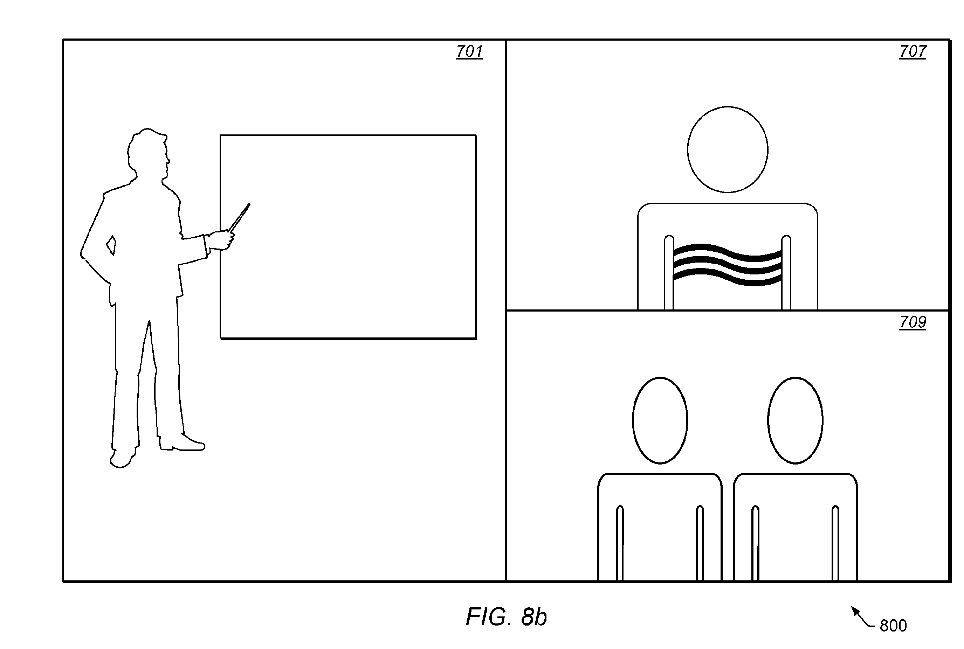

In some embodiments, if main video image 701 and two side video images 707 and 709 are placed in video image layout 800 (see FIG. 8b) with equal sized video images, main video image 701 may be scaled down and the two side video images 703 and 705 may be scaled up (or not scaled at all). Other scaling combinations are also contemplated. In some embodiments, the separated video images may not be scaled (e.g., the separated video images may be only rearranged). In some embodiments, scaling may include changing the ratio of the outer dimensions of an image.

In some embodiments, leaf endpoint 155 may form a new video image layout 405c that includes its current local video image 555b as one of the video images. In some embodiments, the layout of the received video image layout and the new video image layout may be the same. In some embodiments, current local video image 555b may be more current than the local video originally sent to facilitator endpoint 153 and received in composite video image layout 405b. In some embodiments, only one of the video images may be separated out of composite video image layout 405b. For example, the video image corresponding to the local video image may be separated and the current local video image 555b may be placed into composite video image layout 405c in place of the previous local video image 555a.

At 319, leaf endpoint 155 may display new composite video image layout 405c and/or composite video image layout 405b from master endpoint 151. FIG. 8b illustrates an example of new video image layout 800 with three video images 701, 707, and 709 on display. FIG. 10 illustrates other possible video image layouts, according to various embodiments. Other video image layouts are also contemplated. In some embodiments, metadata 901 may be displayed (e.g., with each respective video image in the video image layout).

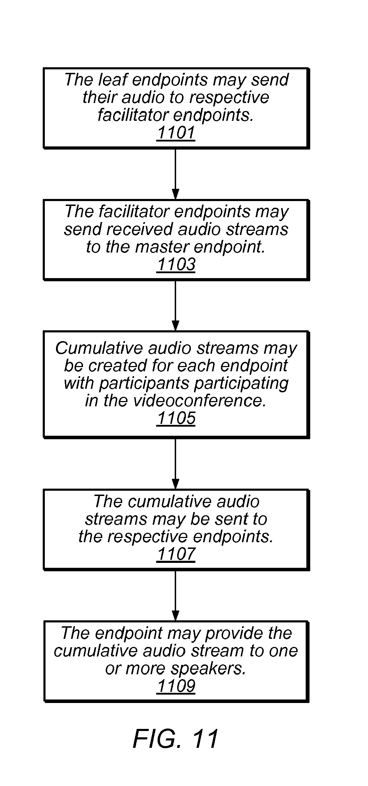

FIG. 11 illustrates a flowchart of a method for audio management in a distributed virtual multipoint control unit, according to an embodiment. It should be noted that in various embodiments of the methods described below, one or more of the elements described may be performed concurrently, in a different order than shown, or may be omitted entirely. Other additional elements may also be performed as desired.

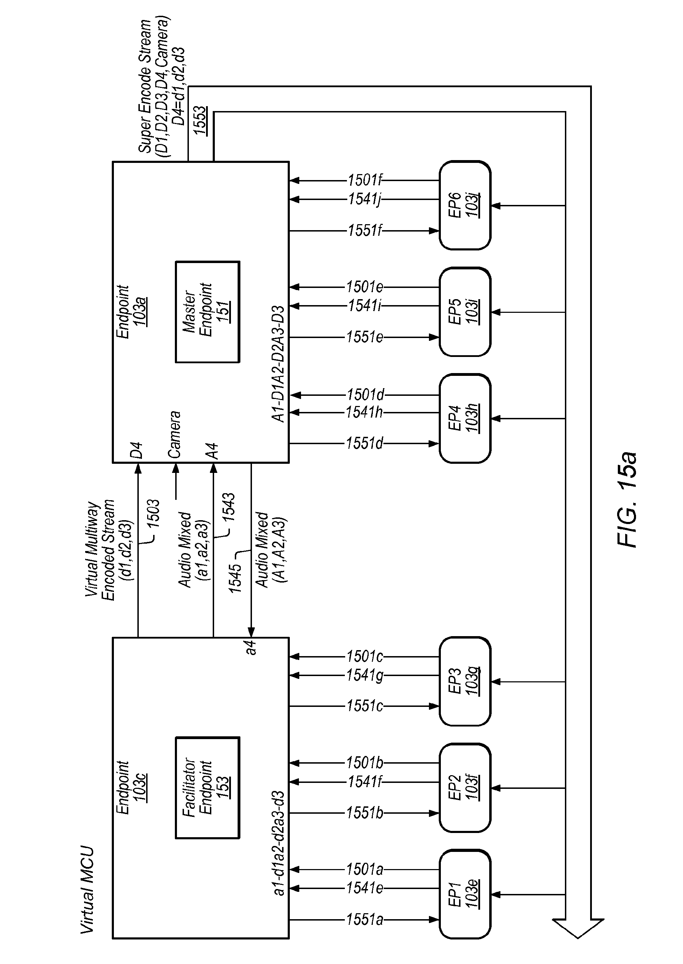

At 1101, leaf endpoints 155 (e.g., endpoints 103e-j in FIG. 15a) may send respective audio streams (e.g., 1541e-g) to respective facilitator endpoints 153 (e.g., endpoint 103c). Audio from microphones at leaf endpoint 155 may be encoded and sent in respective audio streams to respective facilitator endpoints 153 for leaf endpoints 155. Audio streams may also be sent to master endpoint 151 (e.g., endpoint 103a) from leaf endpoints 155 (e.g., endpoints 103h-j). In some embodiments, respective video streams 1501a-f may also be sent to facilitator endpoint 153 and/or master endpoint 151. Video streams 1501a-fmay be sent in raw format from leaf endpoint 155 to facilitator endpoint 153, master endpoint 151, and/or between facilitator endpoint 153 and master endpoint 151. While a raw format may decrease latency in video display of the product video stream from master endpoint 151, the raw format may require a higher bit rate.

At 1103, facilitator endpoints 153 may send received audio streams (e.g., in a mixed audio stream 1543 including a combination of the received audio stream (e.g., audio streams 1541e-g) or may send the separate streams 1541e-g) to master endpoint 151. Facilitator endpoint 153 may decode the audio received from leaf endpoints 155 prior to sending the audio to master endpoint 151. Facilitator endpoint 153 may combine the audio streams and encode the combined audio stream before sending the combined audio stream to master endpoint 151. In some embodiments, the audio streams sent to master endpoint 151 may be labeled with information about source leaf endpoint 155. In some embodiments, facilitator endpoint 153 may further send cumulative video stream 1503 to master endpoint 151. In some embodiments, cumulative video stream 1503 may include a composite video image in one video stream that includes the video images from endpoints 103e-g. In some embodiments, cumulative video stream may include multiple video streams from endpoints 103e-g.

At 1105, cumulative audio streams (e.g., audio streams 1551a-f (referred generally as "cumulative audio stream 1551")) may be created for each participating endpoint 103 in the videoconference (e.g., leaf endpoints 155, facilitator endpoints 153, and/or master endpoint 151). Each respective cumulative audio stream 1551 may include the audio from one or more of the other endpoints 103 participating in the videoconference call and may not include the audio of recipient endpoint 103. In some embodiments, master endpoint 151 may create each cumulative audio stream 1551 for each respective endpoint (e.g., endpoints 103e-j). In some embodiments, master endpoint 151 may send the received audio streams to each facilitator endpoint 153 and facilitator endpoints 153 may create cumulative audio streams 1551 for their respective leaf endpoints 155. Other audio stream arrangements are also contemplated.

At 1107, cumulative audio streams 1551 may be sent to respective endpoints 103. In some embodiments, master endpoint 151 may send cumulative audio stream 1551 to respective leaf endpoint 155. In some embodiments, facilitator endpoint 153 may send cumulative audio stream 1551 to respective leaf endpoint 155. In some embodiments, master endpoint 151 may send a composite video stream (e.g., that includes video images of multiple endpoints 103) to endpoints 103e-j (e.g., composite video stream 1553). In some embodiments, master endpoint 151 may send multiple video streams to endpoints 103.

At 1109, endpoint 103 may provide cumulative audio stream 1551 to one or more speakers for reproduction.

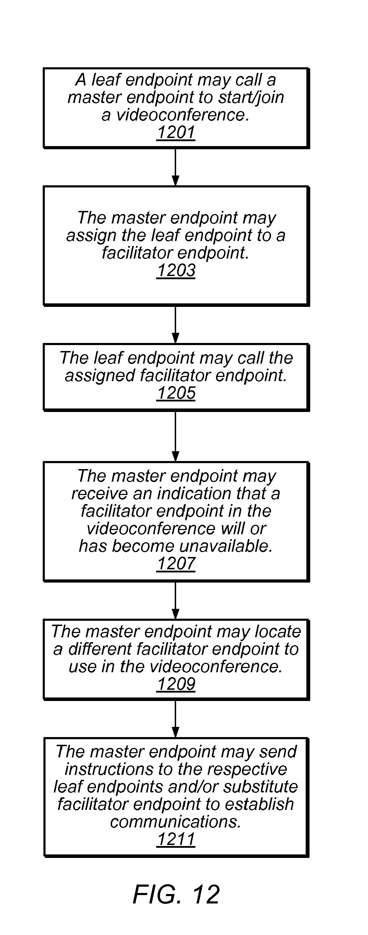

FIG. 12 illustrates a flowchart of a method for controlling a distributed virtual multipoint control unit, according to an embodiment. It should be noted that in various embodiments of the methods described below, one or more of the elements described may be performed concurrently, in a different order than shown, or may be omitted entirely. Other additional elements may also be performed as desired.

At 1201, leaf endpoint 155 may call master endpoint 151 to start/join a video conference.

At 1203, master endpoint 151 may assign leaf endpoint 155 to facilitator endpoint 153 based on at least one operable characteristic of facilitator endpoint 153 and/or leaf endpoint 155. For example, master endpoint 151 may dynamically select a facilitator endpoint 153 within a network (e.g., a LAN or WAN) based on a network characteristic (e.g., IP round trip time). As another example, the at least one operable characteristic may indicate a likelihood of facilitator endpoint 153 being in use at a time of a current videoconference call. Master endpoint 151 may monitor facilitator endpoints 153 (e.g., on a daily basis) and may determine usage patterns for multiple facilitator endpoints 153. For example, master endpoint 151 may discover that a particular facilitator endpoint 153 is not used often during the afternoon. Master endpoint 151 may then store an indicator noting that master endpoint 151 may be able to use particular facilitator endpoint 153 in an afternoon videoconference call. In some embodiments, master endpoint 151 may also check the status of facilitator endpoint 153 (e.g., by determining if facilitator endpoint 153 is currently in a videoconference call) prior to assigning leaf endpoint 155 to facilitator endpoint 153. In some embodiments, part of assigning leaf endpoint 155 to facilitator endpoint 153 may include sending an identification of respective facilitator endpoint 153 and/or an access number/IP address for facilitator endpoint 153 to leaf endpoint 155.

At 1205, leaf endpoint 155 may call the assigned facilitator endpoint 153.

At 1207, master endpoint 151 may receive an indication that facilitator endpoint 153 in the videoconference will or has become unavailable. For example, master endpoint 151 may note a different videoconference call that is scheduled to take place using facilitator endpoint 153. In some embodiments, an individual (not in the current videoconference) may attempt to start using facilitator endpoint 153 to start a different videoconference (e.g., by accessing a menu on facilitator endpoint 153 to start a dialing process). In some embodiments, facilitator endpoint 153 may send the indication (e.g., a digital message) to master endpoint 151 indicating the interruption.

At 1209, master endpoint 151 may locate different facilitator endpoint 153 to use in the videoconference. For example, master endpoint 151 may analyze operable characteristics of other facilitator endpoints 153 to locate substitute facilitator endpoint 153. In some embodiments, if substitute facilitator endpoint 153 cannot be located, the participants in the videoconference (all or a subset) may be notified of the problem. In some embodiments, leaf endpoint 155 that is about to be interrupted may display a message regarding the current videoconference and the individual about to start a new videoconference may hold off until the current videoconference is concluded. In some embodiments (e.g., during high priority videoconferences) facilitator endpoints 153 may not allow an individual to use facilitator endpoint 153 until the current videoconference has concluded.

At 1211, master endpoint 151 may send instructions to respective leaf endpoints 155 and/or substitute facilitator endpoint 153 to establish communications. For example, leaf endpoints 155 may hang up with current facilitator endpoint 153 and call substitute facilitator endpoint 153. In some embodiments, substitute facilitator endpoint 153 may initiate the call with respective leaf endpoints 155. In some embodiments, the new communication link may be established with little interruption to the videoconference. For example, during the call initiation, the current video frame may be frozen on the screen until a new video image is received when the new communication link is established. In some embodiments, the participants at respective leaf endpoints 155 may or may not be notified of the facilitator endpoint switch.

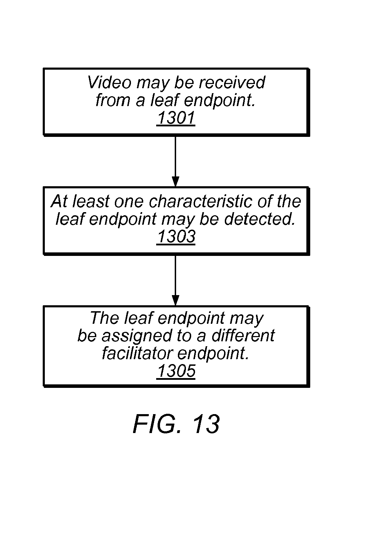

FIG. 13 illustrates a flowchart of a method for isolating leaf endpoint 155 in a distributed virtual multipoint control unit, according to an embodiment. It should be noted that in various embodiments of the methods described below, one or more of the elements described may be performed concurrently, in a different order than shown, or may be omitted entirely. Other additional elements may also be performed as desired.

At 1301, video may be received from leaf endpoint 155. In some embodiments, video may be received from leaf endpoint 155 through facilitator endpoint 153.

At 1303, at least one characteristic of leaf endpoint 155 may be detected (e.g., by facilitator endpoint 153 and/or master endpoint 151). In some embodiments, master endpoint 151 may assign leaf endpoint 155 to specific facilitator endpoint 153 based on the detected at least one characteristic. For example, the detected characteristic may include a low display and/or camera resolution (e.g., as compared to the other leaf endpoints 155). In some embodiments, the detected characteristic may include a high error rate (e.g., as compared to the other leaf endpoints 155). In some embodiments, the detected characteristic may indicate that leaf endpoint 155 is a host endpoint and/or include a main presenter for the videoconference.

At 1305, leaf endpoint 155 may be assigned to different facilitator endpoint 153 (e.g., facilitator endpoint 153 dedicated to leaf endpoint 155). In some embodiments, the process described above in elements 1209-1211 may be used to reassign leaf endpoint 155. Assigning specific leaf endpoint 155 to particular facilitator endpoint 153 may improve the interaction between other leaf endpoints 155 and previous facilitator endpoint 153. For example, facilitator endpoint 153 may be able to use a higher resolution when sending/receiving video images to/from other leaf endpoints 155. In addition, facilitator endpoint 153 may have additional processing power (e.g., processing power that was previous tied up dealing with specific leaf endpoint 155) to manage other leaf endpoints 155. In some embodiments, specific leaf endpoint 155 that is reassigned may have a lower resolution, less processing power, etc. than other leaf endpoints 155 in the videoconference. Facilitator endpoint 153 assigned to specific leaf endpoint 155 may be able to handle additional intercode frame requests from the specific endpoint and/or make other accommodations for the specific endpoint. For example, master endpoint 151 may send a composite video image to facilitator endpoint 153 and facilitator endpoint 153 may send a composite video image to specific leaf endpoint 155 (which may make repeated requests for intercede frame requests from facilitator endpoint 153, for example, because of data loss). In some embodiments, the audio only leaf endpoints may be assigned to separate facilitator endpoint 153. In some embodiments, reassigning leaf endpoint 155 may provide additional processing resources to provide a better connection to a priority endpoint (e.g., the host and/or a presenter). Facilitator endpoint 153 may reduce latency to the priority endpoint.

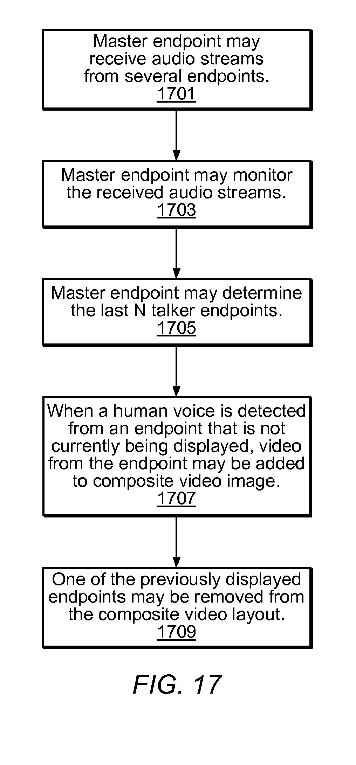

FIG. 17 illustrates a flowchart of a method for displaying last N talkers in a virtual distributed multipoint control unit, according to an embodiment. It should be noted that in various embodiments of the methods described below, one or more of the elements described may be performed concurrently, in a different order than shown, or may be omitted entirely. Other additional elements may also be performed as desired.

At 1701, master endpoint 151 may receive audio streams 1541 from several endpoints 103 in a videoconference. In some embodiments, master endpoint 151 may receive audio streams 1541 from leaf endpoints 155 communicating with facilitator endpoint 153.

At 1703, master endpoint 151 (or facilitator endpoint 153) may monitor received audio streams 1541. Master endpoint 151 may monitor the audio in audio streams 1541 to determine which audio streams 1541 may include human voices. For example, human voices in audio streams 1541 may be represented by a particular audio pattern (e.g., amplitude over time) and/or frequencies recognizable by audio processing algorithms (e.g., implemented on processors of master endpoint 1541 or other endpoints 103). For example, detected audio energy in a frequency range associated with human voices may be associated with a human voice. In some embodiments, master endpoint 151 may look to an amount of energy in respective audio signal 1541 to determine which audio signals 1541 may include a human voice. For example, energy levels in audio signal 1541 may be averaged over time and detected levels above the averaged energy level may be associated with a human voice. In some embodiments, a threshold may be predetermined or set by a user (e.g., the threshold may be an amplitude level in decibels of average human voices (e.g., 60-85 decibels) in a conference environment). Other thresholds are also contemplated. In some embodiments, facilitator endpoints 153 and/or leaf endpoints 155 may monitor audio streams 1541 for human voices. Facilitator endpoints 153 and/or leaf endpoints 155 may signal master endpoint 151 when a voice is detected.

At 1705, master endpoint 151 (or facilitator endpoint 153) may determine which endpoints 103 include the last N talkers. Methods for determining the last N talkers may be found, for example, in U.S. Patent Application titled "Systems and Methods for Selecting Videoconferencing Endpoints for Display in a Composite Video Image", serial number 12/244,436 which was filed October 2, 2008, whose inventors are Ashish Goyal, Hrishikesh Gopal Kulkarni, and Shantha Kumari Harohalli Sathyanarayana Rao which is hereby incorporated by reference in its entirety as though fully and completely set forth herein. N may include a default number and/or may be set by a user. For example, a host at master endpoint 151 may specify composite video image 407 should include 4 total endpoints 103 (N = 4). In this example, last four endpoints 103 with detected human voices (or, for example, audio above a threshold) may be displayed in a composite video image provided to endpoints 103 by master endpoint 151. N may also be dynamic (e.g., N may dynamically adjust to be a percentage of the total number of endpoints 103 participating in the videoconference).

In some embodiments, when master endpoint 151, facilitator endpoint 153, or leaf endpoint 155 determines that audio stream 1541 has a human voice (or is above a threshold, etc), endpoint 103 associated with audio stream 701 may be associated with a current talker in the videoconference. Other methods of determining which audio streams 1541 have a talker may be found in U.S. Patent Application titled "Controlling Video Display Mode in a Video Conferencing System", serial number 11/348,217, which was filed February 6, 2006, whose inventor is Michael L. Kenoyer which is hereby incorporated by reference in its entirety as though fully and completely set forth herein. In some embodiments, audio stream 1541 may be considered to include a participant talking in the videoconference when the audio signal strength exceeds a threshold (e.g., a default or user provided threshold) for energy and/or time (e.g., is louder than a given threshold for at least a minimum amount of time such as 2-5 seconds). Other time thresholds are also possible (e.g., 10 seconds, 20 seconds, etc). In some embodiments, a user may indicate when they are speaking by providing user input (e.g., by pressing a key on a keyboard coupled to the user's endpoint 103). Other talker determinations are also contemplated.

In some embodiments, master endpoint 151 may use timers or a queue system to determine the last N talkers (other methods of determining the last N talkers may also be used). For example, when a human voice is detected in audio stream 1541 of endpoint 103, a video image (e.g., see video images 455b-h) of video stream 1501 (e.g., see video streams 1501a-f) for endpoint 103 may be displayed in a composite video stream and a timer for endpoint 103 may be started (or restarted if endpoint 103 currently being displayed is a last N talker). The N endpoints 103 with timers indicating the shortest times (corresponding, therefore, to the most recent talkers) may have their corresponding video image displayed in a composite video image. In some embodiments, a time stamp may be noted for endpoint 103 when a talker is detected and the time to the last time stamp for endpoints 103 may be used to determine the most recent talkers. Other timing methods may also be used. In some embodiments, an indicator for endpoint 103 with audio stream 701 associated with a human voice may be moved to the top of a list and endpoints 103 previously listed may be lowered on the list by one spot. When a talker is detected in audio stream 701, an indicator for corresponding endpoint 103 may be moved to the top of the list (or may remain at the top of the list if it is also the last detected talker). The top N indicated endpoints 103 may be displayed in a composite video image. Other methods of tracking the current N talker endpoints 103 may also be used. For example, other tracking methods besides a list may be used.

In some embodiments, master endpoint 151 (or, for example, facilitator endpoint 153) may further determine of the last N talkers which talker is the dominant talker. For example, master endpoint 151 may consider the most recent talker the dominant talker, may consider the talker who has been detected speaking longest over a period of time the dominant talker, or may consider the talker who has the most energy detected in their audio signal to be the dominant talker. Other methods of determining the dominant talker are also contemplated. In some embodiments, the dominant talker may be displayed in a larger pane of the composite video image than the other displayed video images.

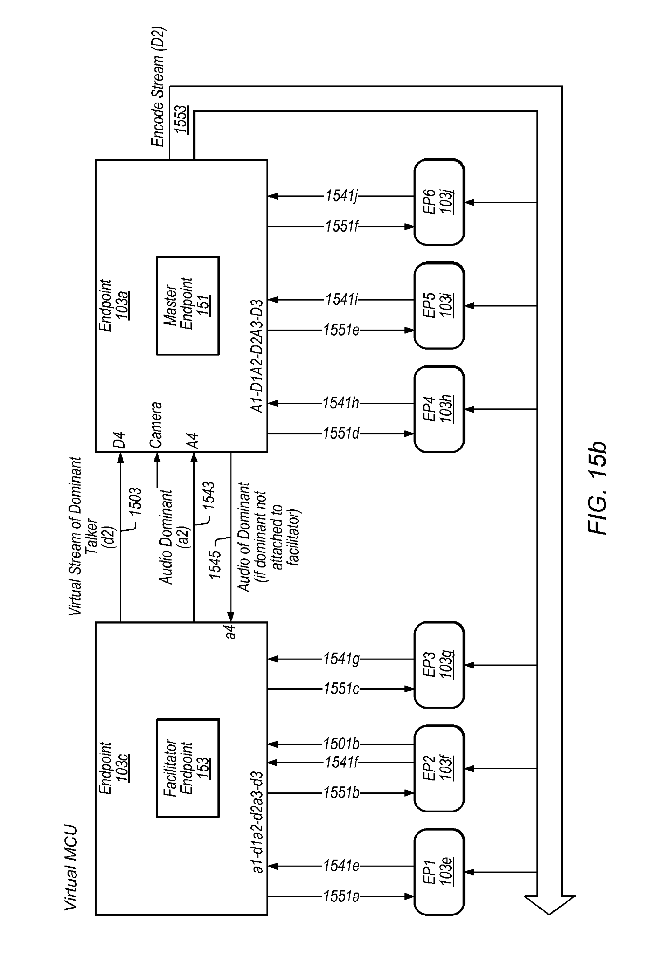

In some embodiments, endpoints 103 that are not being displayed may be instructed by master endpoint 151 or facilitator endpoint 153 not to send their video streams 1501 to respective master endpoint 151 or facilitator endpoint 153. For example, as seen in FIG. 15b, endpoints 103e, 103g, 103h, 103i, and 103j may discontinue sending video stream 1501 while endpoint 103f may send video stream 1501b to facilitator endpoint 153 which may send a video stream 1503 to master endpoint 151 (facilitator endpoint 153 may also send the audio stream 1541 from endpoint 103f to the master endpoint 151 in stream 1543). In some embodiments, multiple endpoints 103 may send their video to be composited while one or more other endpoints 103 are not sending their video. In some embodiments, master endpoint 151 and/or facilitator endpoint 153 may ignore (e.g., not decode) video streams 1501 sent by endpoints 103 that are not currently being displayed. The master endpoint 151 may send a video stream 1553 with the video of a dominant talker endpoint (or, for example, a designated presenter endpoint, control endpoint, etc.) to the endpoints 103 (the audio of the dominant talker endpoint may also be sent to the endpoints 103). In some embodiments, if the dominant talker endpoint is communicating directly with the master endpoint 151, the master endpoint 151 may send the audio of the dominant talker endpoint to the facilitator endpoint 153 to be distributed to the endpoints 103 communicating directly with the facilitator endpoint 153. In some embodiments, master endpoint 151 and facilitator endpoint 153 may make detect one or more actively talking endpoints and the master endpoint 151 may compile two or more of the actively talking endpoints into a composite image to send to the endpoints 103.

At 1707, when a human voice is detected in audio stream 1541 that corresponds to endpoint 103 that is not currently being displayed in a composite video image, master endpoint 151 may add video from the corresponding endpoint to the composite video image. In some embodiments, the corresponding endpoint's video may no longer be ignored by the compositing master endpoint 151 or master endpoint 151 may send a message to the corresponding endpoint requesting the endpoint start sending endpoint's video stream 1501 to master endpoint 151. In some embodiments, the most current detected talker endpoint may be displayed in a specific place in a composite video image (e.g., in a larger pane than other displayed endpoints 103). For example, if endpoint 103b has the most current detected talker endpoint 103, video image 455b from endpoint 103b may be displayed in the large pane of the composite video image sent to endpoints 103.

In some embodiments, voice detection may occur locally at leaf endpoints 155. For example, leaf endpoints 155 may be instructed (e.g., by master endpoint 151) to start sending their respective video stream 1501 (and/or audio stream 1541) when endpoint 103 detects human voices (or, for example, audio over a certain level) from the local audio source (e.g., local microphones). Master endpoint 151 (or facilitator endpoint) may then determine the last N talkers based on when master endpoint 151 (or facilitator endpoint 153) receives video streams 703 (and/or audio stream 701) from various endpoints 103. In some embodiments, master endpoint 151 may send instructions to endpoint 103 to stop sending its video stream 1501 (and/or audio stream 701) if human voices are no longer detected in audio stream 1501 of respective endpoint 103 and video stream 1501 is being received from a different endpoint 103. Other management schemes for determining the last N talkers are also contemplated.

In some embodiments, statistics and other information may also be displayed in video images 455 of a composite video image. For example, participant location, codec type, user identifiers, etc. may be displayed in respective video images 455 of a composite video image. In some embodiments, the statistics may be provided for all endpoints 103 or only endpoints 103 being displayed in a composite video image. In some embodiments, the statistics may be sorted on the basis of talker dominance, codec type, or call type (e.g., audio/video).

At 1709, one of the previously displayed endpoints 103 may be removed from the composite video image (e.g., corresponding to endpoint 103 with the longest duration since the last detected human voice). In some embodiments, a video decoder previously being used to decode the previously displayed endpoint 103 may be reassigned to decode video stream 1501 from the most current N-talker endpoint 103 (e.g., just added to the composite video image).

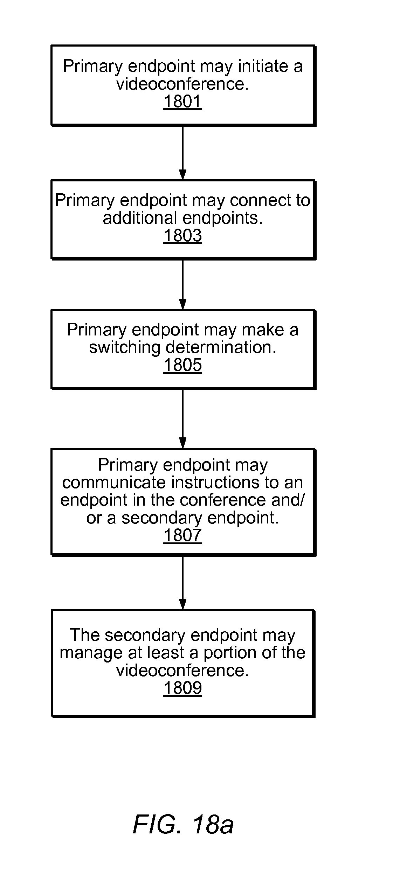

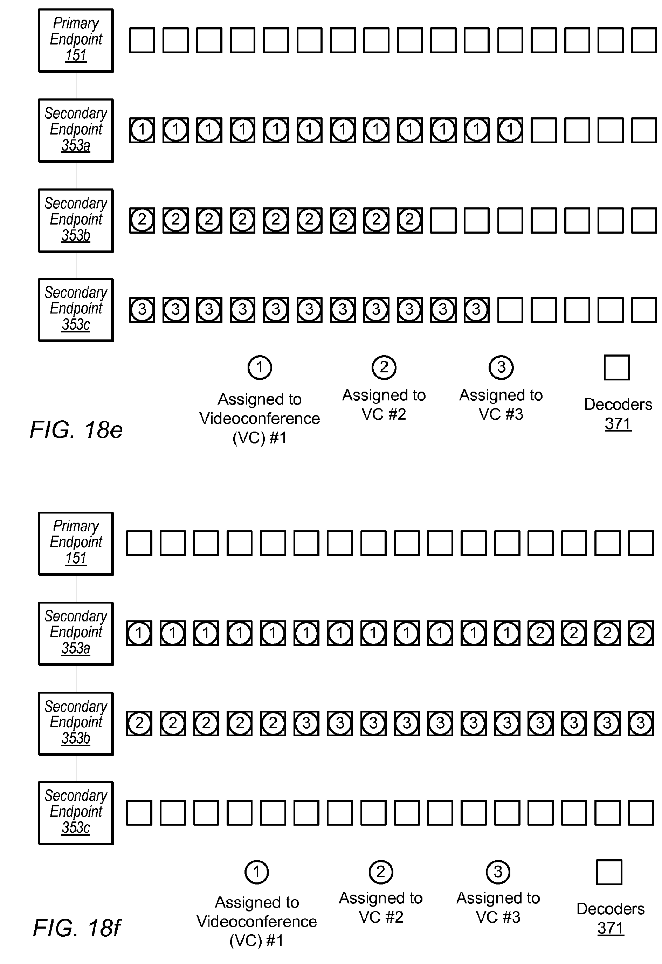

FIG. 18a illustrates a flowchart of a method for extending endpoint resources, according to an embodiment. It should be noted that in various embodiments of the methods described below, one or more of the elements described may be performed concurrently, in a different order than shown, or may be omitted entirely. Other additional elements may also be performed as desired.

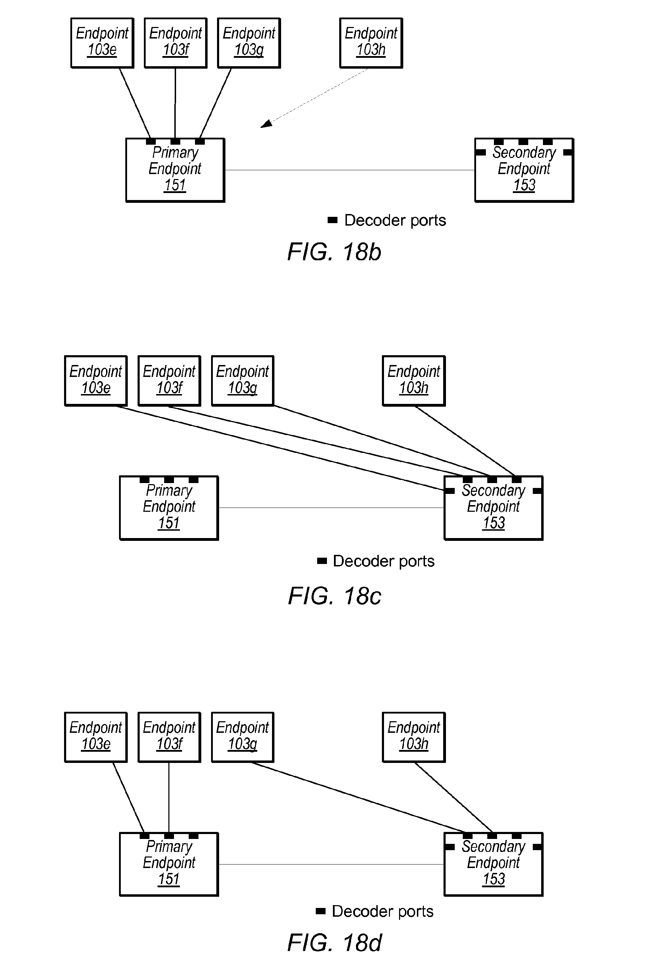

At 1801, primary (e.g., master) endpoint 151 may initiate a videoconference. For example, primary endpoint 151 may receive a request from local participant 214 to dial remote (e.g., leaf) endpoint 103 (e.g., remote endpoint 103e in FIG. 18b) to establish a videoconference or primary endpoint 151 may receive a request from remote endpoint 103 to establish a videoconference. In some embodiments, requesting participant 214 may enter a prefix or conference type identifier (e.g., by pressing a videoconference button or entering "01" to indicate a videoconference, "02" to indicate an audio conference, etc). In some embodiments, participant 214 may dial a conference number (e.g., 123321) to access a scheduled videoconference or an ongoing videoconference. In some embodiments, endpoint 103 may dial primary endpoint 151 directly, endpoint 103 may initiate communications with a bridge via Intelligent Voice Routing (IVR), or prefix dialing through a gatekeeper. Other conference initiations are also contemplated. As noted above, in some embodiments, primary endpoint 151 may include a local conference endpoint capable of supporting a videoconference that includes one or more local participants. For example, primary endpoint 151 may be capable of receiving 3 input signals and providing two output signals. Other combinations of input signal and output signal capabilities are also contemplated. It is to be noted that "primary endpoint" and "secondary endpoint" may be embodiments of endpoint 103 described above. For example, a primary endpoint 151 and/or secondary (e.g., facilitator) endpoint 153 may operate as a participating endpoint in a videoconference. Further, primary endpoint 151 and/or secondary endpoint 153 may be capable of operating as a master endpoint or facilitator endpoint as described above.

At 1803, primary endpoint 151 may connect to additional endpoints 103. For example, primary endpoint 151 may receive connection requests from additional endpoints 103 and primary endpoint 151 may add additional endpoints 103 (e.g., endpoints 103f and 103g as seen in FIG. 18b) to the videoconference. Alternatively, primary endpoint 151 may dial other endpoints 103 (e.g., at the request of a local participant) to join the other endpoints 103 into the videoconference. In some embodiments, a participant at primary endpoint 151 may press an "add-call" button (or, for example, access an add-call menu option, etc.) to add an endpoint.

At 1805, primary endpoint 151 may make a switching determination. In some embodiments, if the number of video inputs (e.g., from remote endpoints, local cameras, etc.) in a videoconference are about to exceed or are predicted to exceed the processing capabilities (e.g., the number of decoder ports) of primary endpoint 151 (e.g., when endpoint 103h in FIG. 18b tries to connect to the videoconference), primary endpoint 151 may make the switching determination to transfer one or more of the video input sources (e.g., remote endpoints 103) to secondary endpoint 153 with capacity to manage the videoconference (or assist in managing the videoconference). For example, endpoints 103 may be transferred to secondary endpoint 153 (e.g., as seen in FIG. 18c, endpoints 103e-h may be transferred to secondary endpoint 153) or a subset of endpoints 103 may be transferred (e.g., as seen in FIG. 18d, endpoints 103g-h may be transferred to secondary endpoint 153). In some embodiments, transferring endpoint 103 may include sending instructions to endpoint 103 and/or to secondary endpoint 153 to establish communications with each other. Endpoint 103 may then begin communicating with secondary endpoint 153 (and/or vice-versa). In some embodiments, transferring an endpoint 103 may include directing endpoint 103, attempting to connect to primary endpoint 151, to secondary endpoint 153. For example, if primary endpoint 151 has three video decoders, when a fourth endpoint attempts to connect, the fourth endpoint may be directed to secondary endpoint 153 and primary endpoint 151 and secondary endpoint 153 may coordinate to facilitate the videoconference call with all four endpoints 103.

In some embodiments, primary endpoint 151 may make a switching determination to transfer one or more of the video input sources in a videoconference to secondary endpoint 153 before the number of video inputs exceeds the number of decoders on primary endpoint 151. For example, if a planned videoconference will require more resources than primary endpoint 151 is configured to provide, primary endpoint 151 may transfer the videoconference (or part of the videoconference) to secondary endpoint 153 before the resources on primary endpoint 151 are exceeded. In some embodiments, primary endpoint 151 may use secondary endpoint 153 from the beginning of a videoconference. For example, primary endpoint 151 may have an IP address (or a prioritized list of IP addresses) of one or more secondary endpoints 153 to connect to when establishing a videoconference. Primary endpoint 151 may also analyze which secondary endpoint 153 to use for the videoconference by analyzing the characteristics of secondary endpoints 153 (e.g., number of input ports, codec types supported, etc). In some embodiments, primary endpoint 151 may transfer the videoconference to one of endpoints 103 in the videoconference (e.g., if primary endpoint 151 determines that one of endpoints 103 in the videoconference has the ability to manage the videoconference).

In some embodiments, primary endpoint 151 may make the switching determination at least in part on an external indication (e.g., a participant in the videoconference may direct primary endpoint 151 to perform the switch and/or may specify which secondary endpoint 153 to switch the communications to). In some embodiments, primary endpoint 151 may use secondary endpoints 153 on a first-come-first-serve basis or may use a specified order (e.g., specified by a participant 214). In some embodiments, videoconferences may be assigned to secondary endpoints 153 based on characteristics of the secondary endpoint (e.g., number of decoders, availability, etc). In some embodiments, as new endpoints 103 call into primary endpoint 151, new endpoints 103 may be redirected to secondary endpoint 153 without the user of the new endpoint knowing that the endpoint has been redirected.

At 1807, primary endpoint 151 may communicate instructions to endpoint 103 and/or secondary endpoint 153. Primary endpoint 151 may make a switching determination based in part on a number of endpoints 103 to support in the videoconference exceeding a number of input ports of primary endpoint 151. In some embodiments, primary endpoint 151 may access another endpoint resource to support the videoconference. In some embodiments, primary endpoint 151 may transfer all of the video input sources (such as the participating endpoints 103) in the videoconference to a larger secondary endpoint 153 that primary endpoint 151 may control or may pass control of the videoconference over to. In some embodiments, primary endpoint 151 may transfer a subset of the video inputs to secondary endpoint 153 (and may maintain control over the non-transferred video inputs). If primary endpoint 151 and one or more secondary endpoints 153 are supporting a videoconference together, the primary endpoint 151 and/or secondary endpoints 153 may communicate (e.g., over a local connection, over the network 101, etc.) to support the videoconference. For example, video images of the endpoints to be put into a composite video image for the videoconference may be sent from the primary endpoint 151 to the secondary endpoint 153 (or sent from the secondary endpoint 153 to the primary endpoint 151) to be composited with other video images. Similarly, audio streams, configuration information, etc. may be shared (e.g., over local daisy-chained connections, network connections, etc.) as needed among the primary endpoint 151/secondary endpoints 153 to support the videoconference.

In some embodiments, primary endpoint 151 may use multiple secondary endpoints 153 to conduct a videoconference (e.g., as seen in FIGs. 1b-c). For example, primary endpoint 151 may organize videoconferences on several secondary endpoints 153 in a stacked method such that all of input ports of one secondary endpoint 153 are used before another secondary endpoint 153 is used to manage a videoconference. Using a stacked method, a single videoconference may be supported on multiple secondary endpoints 153 (e.g., two 10 input port secondary endpoints 153 may support a 20 way call or three 6 way calls, etc). In some embodiments, each videoconference may use an n-talker processing method as described in U.S. Patent Application titled "Systems and Methods for Selecting Videoconferencing Endpoints for Display in a Composite Video Image", serial number 12/244,436, which was filed October 2, 2008, whose inventors are Ashish Goyal, Hrishikesh Gopal Kulkarni, and Shantha Kumari Harohalli Sathyanarayana Rao is hereby incorporated by reference in its entirety as though fully and completely set forth herein. The last n-talker mode may allow primary endpoint 151 and/or secondary endpoints 153 to support more videoconferencing endpoints in one or more of the videoconferences than the total number of input ports on the primary endpoint 151 and/or secondary endpoint 153 managing the videoconference. In some embodiments, the last-n talker mode may switch on automatically if the number of video inputs received by the primary endpoint 151 and/or secondary endpoints 153 reach or are approaching the number of available video decoders on the primary endpoint 151 and/or secondary endpoints 153. In some embodiments, the primary endpoint 151 and/or secondary endpoint 153 may support videoconferences with more endpoints 103 than video decoders available to the primary endpoint 151 and/or secondary endpoint 153 (e.g., using the n-talker method), but may need to limit the videoconference based on the number of available audio encoders (which may be greater than the number of available video decoders). In some embodiments, a participant may manually select last-n talker mode for one or more of the current videoconferences. In some embodiments, a shared encoder may be used for the non-last-n talkers.

As noted above, primary endpoint 151 may be operable to automatically discover one or more of endpoints 103e-m using an auto discovery method. Part of the discovery process may include primary endpoint 151 determining one or more characteristics of the discovered endpoints and using the determined characteristics to choose an endpoint to pass the one or more endpoints to in the videoconference. Characteristics may include a maximum available bandwidth, a number of multipoint ports, IP capabilities, Primary Rate Interface (PRI) information, ISDN information, Basic Rate Interface (BRI) information, V.35 capability, V.35 Speed, Encryption Capability, public switch telephone network (PSTN) capability, cellular telephone capability, general packet radio service (GPRS) capability, 3G mobile capability, and/or if a user has subscribed to a service. Other characteristics may include a station name (e.g., of endpoint 103), information regarding users that use endpoint 103 (e.g., names, addresses, locations, phone numbers, email addresses, etc.), information regarding the company name that owns or operates endpoint 103 (e.g., names, addresses, locations, phone numbers, email addresses, etc.), an IPv4 Address/Mask, an IPv6 Address, a station capability string, a list of known endpoints 103 (e.g., in a destination subnet and/or otherwise), a list of possible or suspected endpoints 103, a list of unresponsive endpoints 103, and/or other information.

In some embodiments, primary endpoint 151 may seamlessly pass communications of one or more of endpoints 103 to secondary endpoint 153 such as secondary endpoint 153 previously discovered or pre-designated by a videoconference participant such that participants in the videoconference may not be aware that a switch has been performed. In some embodiments, primary endpoint 151 may contact secondary endpoint 153 and may then pass communications from endpoints 103 to secondary endpoint 153 by having endpoints 103 send their video (and/or audio) to a different address (e.g., the IP address of secondary endpoint 153). Primary endpoint 151 may provide configuration information for endpoints 103 to secondary endpoint 153. Configuration information for the endpoint 103 may include, for example, video codec type, audio codec type, IP address, video resolution, video layout preference, and supported bandwidth (other configuration information may also be used). In some embodiments, a user may specify the other primary endpoint 151 or secondary endpoint 153 to use to manage the additional inputs (e.g., prior to or during the videoconference).

At 1809, secondary endpoint 153 may manage at least a portion of the videoconference. In some embodiments, secondary endpoint 153 (receiving part or all of the videoconference from primary endpoint 151) may be placed on reserve prior to the videoconference in order to seamlessly receive endpoints 103 involved in the videoconference if needed. In some embodiments, secondary endpoint 153 may not be placed on reserve, but may instead be located by primary endpoint 151 as an endpoint that is available and capable of supporting part or all of the videoconference.

In some embodiments, a group of secondary endpoints 353a-c (secondary endpoints 353a-c may be embodiments of secondary endpoint 153) may be managed by primary endpoint 151. For example, two or more secondary endpoints 353a-b (e.g., with available decoders 371) may be managed through primary endpoint 151 operating as the contact endpoint for the group. When endpoint 103 initiates a videoconference, endpoint 103 may call into primary endpoint 151 and primary endpoint 151 may direct endpoint 103 to one of secondary endpoints 353a-c in the group. Endpoint 103 attempting to initiate the call may use the assigned secondary endpoint 353 as the central endpoint of the videoconference. Central secondary endpoint 353 may dial out to other endpoints 103 or receive requests from other endpoints 103 to join the videoconference. Primary endpoint 151 may operate as a signaling resource for secondary endpoints 353a-c in the group that may operate as secondary resources (in some embodiments, primary endpoint 151 may also operate as a secondary resource). As seen in FIG. 18e, secondary endpoints 353a-c may include multiple decoder resources. In some embodiments, one decoder per endpoint may be used in a videoconference call. For example, videoconference call #1 may include 12 endpoints that use 12 decoders 371 of secondary endpoint 353a; videoconference call #2 may include 9 endpoints that use 9 decoders 371 of secondary endpoint 353b; and videoconference call #3 may include 11 endpoints that use 11 decoders 371 of secondary endpoint 353c. In some embodiments, two or more of secondary endpoints 353 and/or primary endpoint 151 may be located together such that they can be daisy-chained. The daisy-chained primary endpoints 151 and/or secondary endpoints 153 may have a single point of entry (e.g., the primary endpoints 151 and secondary endpoints 153 may operate as a rack of MCUs that are accessed externally (e.g., through network 101) through a single IP address). In some embodiments, the primary endpoints 151 and/or secondary endpoints 153 may be accessed in an IVR (Intelligent Voice Routing) process. In some embodiments, secondary endpoints 353 and/or primary endpoint 151 may be located at different locations (and may communicate, for example, over a network).

In some embodiments, primary endpoint 151 may assign/transfer endpoints 103 to secondary endpoints 353 using a stacked method. For example, primary endpoint 151 may organize videoconferences on several secondary endpoints 353 in a stacked method such that the decoders (or other resources such as input ports) of one secondary endpoint 353 are used before another secondary endpoint 353 is used to support videoconferences managed by primary endpoint 151. Using a stacked method, a single videoconference may actually be supported on multiple secondary endpoints 353. For example, as seen in FIG. 3f, videoconference call #1 may include 12 endpoints that use 12 decoders 371 of secondary endpoint 353a; videoconference call #2 may include 9 endpoints that use 4 decoders 371 of secondary endpoint 353a and 5 decoders 371 of secondary endpoint 353b; and videoconference call #3 may include 11 endpoints that use 11 decoders 371 of secondary endpoint 353b (leaving secondary endpoint 353c free, for example, to serve as a back-up secondary endpoint). As seen in FIGs. 3e-f, primary endpoint 151 may also have decoders 371 that may be used in one or more of the videoconference calls.

In some embodiments, primary endpoint 151 may allocate videoconferences on a first come first serve basis. For example, a new conference may be started on secondary endpoint 153 with the greatest number of resources (e.g., available decoders). In some embodiments, primary endpoint 151 may seamlessly pass (e.g., such that it is not readily evident to one or more participants of the videoconference) one or more endpoints 103 in a videoconference to one of secondary endpoints 153 if the videoconference surpasses the endpoint's capabilities.

In some embodiments, transitioning an endpoint's conference communications from primary endpoint 151 to secondary endpoint 153 may result in one or more side effects at the endpoint. For example, the video displayed at the endpoint may temporarily "freeze" or go blank. In some embodiments, the audio may have a silent pause. To address these side effects, in some embodiments, primary endpoint 151 may buffer video and/or audio from endpoints 103 in the videoconference to display/play during the switch to make the switch appear seamless (e.g., as the buffer ends, secondary endpoint 153 may begin sending video and/or audio). Other transitions are also contemplated. For example, in some embodiments, primary endpoint 151 may hold off switching until a momentary silence is detected in the audio (e.g., when there are no speakers in the videoconference). The temporary "freeze" or blank screen and silent audio moment may thus be less noticeable. In some embodiments, primary endpoint 151 may buffer the video and audio and wait for a pause in the audio to start buffer playback and affect the switch to secondary endpoint 153. Switching may involve secondary endpoint 153 contacting one or more of the endpoints that will switch or the endpoints being directed to contact secondary endpoint 153. Primary endpoint 151 may pass configuration parameters to secondary endpoint 153 for the endpoints that will be switched or endpoints 103 may provide this information to secondary endpoint 153 after the switch.

### Exemplary Embodiments

The following provides exemplary, non-limiting embodiments of the invention.

A method for conducting a videoconference having a plurality of endpoints, comprising: a facilitator endpoint in the videoconference receiving a video image from a first leaf endpoint in the videoconference; the facilitator endpoint sending the received video image to a master endpoint in the videoconference as part of a facilitator composite image; wherein the master endpoint is operable to form a new composite image using at least the received video image in the facilitator composite image and at least one video image from a second leaf endpoint.

The method of above, wherein the facilitator endpoint is a first facilitator endpoint and wherein the master endpoint is further operable to receive a second facilitator composite image from a second facilitator endpoint; wherein the at least one video image from the second leaf endpoint is received by the master endpoint as part of the second facilitator composite image sent by the second facilitator endpoint.

The method of above, wherein the at least one video image from the second leaf endpoint is received by the master endpoint directly from the second leaf endpoint.

The method of above, wherein the at least one video image from the second leaf endpoint is also received by the master endpoint as part of the facilitator composite image sent by the facilitator endpoint.

The method of above, wherein the master endpoint is operable to send the new composite video image to the first and second leaf endpoints.

The method of above, wherein the master endpoint is operable to: receive composite video images from a plurality of facilitator endpoints; form the new composite video image using video images from at least two of the received composite video images; and send the new composite video image to one or more leaf endpoints communicating with the plurality of facilitator endpoints.

The method of above, further comprising: the facilitator endpoint receiving audio from the first leaf endpoint; and the facilitator endpoint sending the received audio to the master endpoint.

The method of above, wherein the received audio sent to the master endpoint comprises a first audio stream; wherein the master endpoint is further operable to send a second audio stream to the facilitator endpoint; and wherein the method further comprises: the facilitator endpoint forming a cumulative audio stream based on one or more of the first and second audio streams from the master endpoint; and the facilitator endpoint sending the cumulative audio stream to the first leaf endpoint.

The method of above, wherein the received audio sent to the master endpoint comprises a first audio stream; wherein the master endpoint is further operable to receive a second audio stream from the second leaf endpoint; wherein the master endpoint is further operable to form a cumulative audio stream based on one or more of the first audio stream and the second audio stream; and wherein the master endpoint is further operable to send the cumulative audio stream to at least one of the first leaf endpoint and the second leaf endpoint.

The method of above, wherein the master endpoint has a first number of input ports; wherein operation of the facilitator endpoint allows the master endpoint to support a videoconference having a number of facilitator endpoints and leaf endpoints greater than the first number.

The method of above, wherein the master endpoint has a first number of video decoders; wherein operation of the facilitator endpoint allows the master endpoint to support a videoconference having a number of facilitator endpoints and leaf endpoints greater than the first number.

A method, comprising: a master endpoint receiving at least one composite video image from at least one facilitator endpoint, wherein the at least one composite video image comprises at least a video image from a first leaf endpoint; the master endpoint receiving a video image from a second leaf endpoint; the master endpoint compositing at least the video image from the first leaf endpoint and the video image from the second leaf endpoint into a new composite video image.

The method of above, wherein the at least one facilitator endpoint comprises a first facilitator endpoint and a second facilitator endpoint, wherein the at least one composite video image comprises a first composite video image from the first facilitator endpoint and a second composite video image from the second facilitator endpoint, and wherein the video image from the second leaf endpoint is received by the master endpoint as part of the second facilitator composite image.

The method of above, wherein the video image from the second leaf endpoint is received by the master endpoint directly from the second leaf endpoint.

The method of above, wherein the master endpoint is operable to send the new composite video image to the first and second leaf endpoints.

The method of above, further comprising: the master endpoint receiving a videoconference call request from at least the first or second leaf endpoint; and the master endpoint transmitting instructions to the at least the first or second leaf endpoint to call a facilitator endpoint of the at least one facilitator endpoint.

The method of above, further comprising: the master endpoint detecting at least one characteristic of at least the first or second leaf endpoints; and the master endpoint assigning the at least the first or second leaf endpoint to a specific facilitator endpoint of the at least one facilitator endpoint based on the detected at least one characteristic.

The method of above, further comprising: the master endpoint assigning one or more of the first or second leaf endpoint to a specific facilitator endpoint of the at least one facilitator endpoint based on at least one operable characteristic of the specific facilitator endpoint of the at least one facilitator endpoint.

The method of above, wherein the at least one operable characteristic indicates a likelihood of the specific facilitator endpoint of the at least one facilitator endpoint being in use at a time of a current videoconference call.

The method of above, further comprising the master endpoint assigning the one or more leaf endpoints of the plurality of leaf endpoints to a different facilitator endpoint in response to the master endpoint receiving an indication that the facilitator endpoint of the at least one facilitator endpoint is about to be unavailable.

The method of above, wherein the at least one facilitator endpoint comprises a first facilitator endpoint and a second facilitator endpoint; wherein the first facilitator endpoint has n inputs and the second facilitator endpoint has m inputs and wherein the master endpoint is operable to support a videoconference call with n+m leaf endpoints through the first and second facilitator endpoints of the at least one facilitator endpoint.

The method of above, wherein the master endpoint has a first number of input ports; wherein the master endpoint is operable to support a videoconference having a number of facilitator endpoints and leaf endpoints greater than the first number.

The method of above, wherein the master endpoint has a first number of video decoders; wherein the master endpoint is operable to support a videoconference having a number of facilitator endpoints and leaf endpoints greater than the first number.

A system, comprising: a facilitator endpoint, comprising: a processor; and a memory coupled to the processor and configured to store program instructions executable by the processor to: receive a video image from each of at least two leaf endpoints; composite at least two of the received video images into a composite video image; and send the composite video image to a master endpoint, wherein the master endpoint is operable to implement a videoconference between a plurality of leaf endpoints, wherein the plurality of leaf endpoints comprises the at least two leaf endpoints.

The system of above, wherein the master endpoint is operable to receive composite video images from two or more facilitator endpoints, separate at least one video image from each of the two or more received composite video images, and composite at least a subset of the separated video images into a new composite video image.

The system of above, wherein the master endpoint is further operable to send the new composite video image to at least one leaf endpoint of the plurality of endpoints.

The system of above, wherein the program instructions are further executable to receive audio from each of at least two leaf endpoints of the plurality of endpoints and send the received audio to the master endpoint; and wherein the program instructions are further executable to form a cumulative audio stream based on one or more of the received audio streams from the master endpoint and send the cumulative audio stream to at least one leaf endpoint.

The system of above, wherein the facilitator endpoint is operable to enable the master endpoint to support a videoconference having a number of facilitator endpoints and leaf endpoints greater than a number of input ports of the master endpoint.

A method for conducting a videoconference, comprising: a primary endpoint initially communicating with a plurality of endpoints in a videoconference; and the primary endpoint directing communications of at least one endpoint of the plurality of endpoints to a secondary endpoint in the videoconference; wherein the secondary endpoint, or the primary endpoint and the secondary endpoint together, support the videoconference of the at least one endpoint.

The method of above, wherein the primary endpoint directing communications of the at least one endpoint comprises: making a switching determination during the videoconference; and the primary endpoint communicating switching instructions to the at least one endpoint or the secondary endpoint; wherein the at least one endpoint is operable to switch conference communications to the secondary endpoint.

The method of above, wherein making a switching determination is based at least in part on a number of endpoints to support in the videoconference exceeding a number of input ports of the primary endpoint.

The method of above, wherein making a switching determination is based at least in part on an external indication.

The method of above, wherein communicating switching instructions comprises communicating switching instructions to the secondary endpoint that will manage videoconference communications with the at least one endpoint in the videoconference and the secondary endpoint communicating with the at least one endpoint to facilitate switching conference communications to the secondary endpoint.

The method of above, further comprising the primary endpoint receiving video and audio from one or more of the plurality of endpoints communicating with the primary endpoint during the videoconference and providing a video and audio output to the one or more of the plurality of endpoints as part of the videoconference.

The method of above, further comprising communicating configuration information for the at least one endpoint to the secondary endpoint.

A method for switching conference communications from a primary endpoint to a secondary endpoint in a videoconference, comprising: a first endpoint in the videoconference receiving switching instructions, wherein the first endpoint is in the videoconference with the primary endpoint and the secondary endpoint, wherein the switching instructions are sent at least partially in response to a switching determination by the primary endpoint; the first endpoint communicating with the secondary endpoint; and the first endpoint switching conference communications from the primary endpoint to the secondary endpoint, wherein the secondary endpoint is operable to manage the videoconference with the first endpoint.

The method of above, wherein the first endpoint is a subset of a plurality of endpoints in the videoconference and wherein at least one other endpoint of the plurality of endpoints in the videoconference is operable to continue communications with the primary endpoint after the first endpoint switches communications to the secondary endpoint.

The method of above, wherein the switching determination is based at least partially on a number of inputs required to support the videoconference exceeding a number of input ports available on the primary endpoint.

The method of above, wherein the switching determination is based at least in part on receiving switching instructions from an external source.

The method of above, wherein receiving switching instructions comprises receiving switching instructions from the primary endpoint.

The method of above, wherein receiving switching instructions comprises receiving switching instructions from the secondary endpoint in the videoconference.

The method of above, further comprising prior to receiving switching instructions, the primary endpoint receiving video and audio from the one or more endpoints and providing a video and audio output to the one or more endpoints as part of a videoconference.

The method of above, wherein the primary endpoint is operable to communicate configuration information for the one or more endpoints to the secondary endpoint.

A primary endpoint for use in a videoconference, the primary endpoint comprising: at least one processor; a memory coupled to the at least one processor and configured to store program instructions executable by the processor to: communicate with one or more endpoints in a videoconference; and direct communications of at least one endpoint of a plurality of endpoints to a secondary endpoint in the videoconference; wherein the secondary endpoint, or the primary endpoint and the secondary endpoint together, support the videoconference of the at least one endpoint.

The primary endpoint of above, wherein in directing communications of the at least one endpoint, the primary endpoint is operable to: make a switching determination during the videoconference; and communicate switching instructions to the at least one endpoint or the secondary endpoint based on the switching determination; wherein the at least one endpoint is operable to switch conference communications to the secondary endpoint based on the switching instructions.

The primary endpoint of above, wherein the primary endpoint is operable to make the switching determination based at least in part on a number of endpoints to support in the videoconference exceeding a number of input ports of the primary endpoint.

The primary endpoint of above, wherein the primary endpoint is operable to make the switching determination based at least in part on an external indication.

The primary endpoint of above, wherein in communicating switching instructions, the primary endpoint is operable to communicate switching instructions to the secondary endpoint that will manage videoconference communications with the at least one endpoint in the videoconference; wherein the switching instructions are configured to cause the secondary endpoint to communicate with the at least one endpoint to facilitate switching conference communications to the secondary endpoint.

The primary endpoint of above, wherein the program instructions are further executable to communicate configuration information for the at least one endpoint to the secondary endpoint.

Note that the videoconferencing system(s) described herein (e.g., videoconferencing endpoints 103) may be a dedicated videoconferencing system (i.e., whose purpose is to provide videoconferencing) or a general purpose computer (e.g., IBM-compatible PC, Mac, etc.) executing videoconferencing software (e.g., a general purpose computer for using user applications, one of which performs videoconferencing). A dedicated videoconferencing system may be designed specifically for videoconferencing, and is not used as a general purpose computing platform; for example, the dedicated videoconferencing system may execute an operating system which may be typically streamlined (or "locked down") to run one or more applications to provide videoconferencing, e.g., for a conference room of a company. In other embodiments, the videoconferencing system may be a general use computer (e.g., a typical computer system which may be used by the general public or a high end computer system used by corporations) which can execute a plurality of third party applications, one of which provides videoconferencing capabilities. Videoconferencing systems may be complex (such as the videoconferencing system shown in FIG. 2) or simple (e.g., a user computer system with a video camera, microphone and/or speakers). Thus, references to videoconferencing systems, endpoints, etc. herein may refer to general computer systems which execute videoconferencing applications or dedicated videoconferencing systems. Note further that references to the videoconferencing systems performing actions may refer to the videoconferencing application(s) executed by the videoconferencing systems performing the actions (i.e., being executed to perform the actions).

Embodiments of a subset or all (and portions or all) of the above may be implemented by a computer program, e.g., as program instructions stored in a memory medium or carrier medium and executed by a processor. A memory medium may include any of various types of memory devices or storage devices. The term "memory medium" is intended to include an installation medium, e.g., a Compact Disc Read Only Memory (CD-ROM), floppy disks, or tape device; a computer system memory or random access memory such as Dynamic Random Access Memory (DRAM), Double Data Rate Random Access Memory (DDR RAM), Static Random Access Memory (SRAM), Extended Data Out Random Access Memory (EDO RAM), Rambus Random Access Memory (RAM), etc.; or a non-volatile memory such as a magnetic media, e.g., a hard drive, or optical storage. The memory medium may include other types of memory as well, or combinations thereof. In addition, the memory medium may be located in a first computer in which the programs are executed, or may be located in a second different computer that connects to the first computer over a network, such as the Internet. In the latter instance, the second computer may provide program instructions to the first computer for execution. The term "memory medium" may include two or more memory mediums that may reside in different locations, e.g., in different computers that are connected over a network.

In some embodiments, a computer system at a respective participant location may include a memory medium(s) on which one or more computer programs or software components according to one embodiment of the present invention may be stored. For example, the memory medium may store one or more programs that are executable to perform the methods described herein. The memory medium may also store operating system software, as well as other software for operation of the computer system.

Further modifications and alternative embodiments of various aspects of the invention may be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as embodiments. Elements and materials may be substituted for those illustrated and described herein, parts and processes may be reversed, and certain features of the invention may be utilized independently, all as would be apparent to one skilled in the art after having the benefit of this description of the invention. Changes may be made in the elements described herein without departing from the spirit and scope of the invention as described in the following claims.

## Claims

1. A method for conducting a videoconference having a plurality of endpoints, comprising:
a first endpoint in the videoconference receiving a video image from a second endpoint in the videoconference;
the first endpoint sending the received video image to a third endpoint in the videoconference as part of a composite image;
wherein the third endpoint is configured to form a new composite image using at least the received video image in the composite image and at least one video image from a fourth endpoint; and
wherein the third endpoint has a first number of input ports, wherein operation of the first endpoint allows the third endpoint to support a videoconference having a number of endpoints greater than the first number.

2. The method of claim 1,
wherein the third endpoint is further configured to receive a second composite image from a fifth endpoint;
wherein the at least one video image from the fourth endpoint is received by the master endpoint as part of the second composite image sent by the fifth endpoint.

3. The method of claim 1, wherein the at least one video image from the fourth endpoint is received by the third endpoint directly from the fourth endpoint.

4. The method of claim 1, wherein the at least one video image is also received by the third endpoint as part of the composite image sent by the first endpoint.

5. The method of any of the preceding claims, wherein the third endpoint is operable to send the new composite video image to the second and fourth endpoints.

6. The method of any of the preceding claims, wherein the third endpoint is configured to:
receive composite video images from a plurality of first endpoints;
form the new composite video image using video images from at least two of the received composite video images; and
send the new composite video image to one or more second endpoints communicating with the plurality of first endpoints.

7. The method of any of the preceding claims, further comprising:
the first endpoint receiving audio from the second endpoint; and
the first endpoint sending the received audio to the third endpoint.

8. The method of claim 7,
wherein the received audio sent to the third endpoint comprises a first audio stream;
wherein the third endpoint is further configured to send a second audio stream to the first endpoint; and
wherein the method further comprises:
the first endpoint forming a cumulative audio stream based on one or more of the first and second audio streams from the third endpoint; and
the first endpoint sending the cumulative audio stream to the second endpoint.

9. The method of claim 7,
wherein the received audio sent to the third endpoint comprises a first audio stream;
wherein the third endpoint is further configured to receive a second audio stream from the fourth endpoint;
wherein the third endpoint is further configured to form a cumulative audio stream based on one or more of the first audio stream and the second audio stream; and
wherein the third endpoint is further configured to send the cumulative audio stream to at least one of the second endpoint and the fourth endpoint.

10. The method of any of the preceding claims,
wherein the third endpoint has a first number of video decoders;
wherein operation of the first endpoint allows the third endpoint to support a videoconference having a number of endpoints greater than the first number.

11. The method of any of the preceding claims,
wherein the first endpoint is a facilitator endpoint, wherein the second and fourth endpoints are leaf endpoints, and wherein the third endpoint is a master endpoint.

12. A program configured to implement the method of any of claims 1-11.

13. A memory medium storing program instructions executable to implement the method of any of claims 1-11.

14. A system configured to implement the method of any of claims 1-11.
